(19) Europäisches Patentamt
European Patent Office
Office européen des brevets

(11) EP 3 883 012 A1

(12) **EUROPEAN PATENT APPLICATION**

(43) Date of publication:
**22.09.2021 Bulletin 2021/38**

(51) Int Cl.:
*H01M 4/02* (2006.01) *H01M 10/36* (2010.01)

(21) Application number: **20193368.6**

(22) Date of filing: **28.08.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.03.2020 JP 2020048233**
**29.07.2020 JP 2020128554**

(71) Applicant: **KABUSHIKI KAISHA TOSHIBA**
**Minato-ku**
**Tokyo**
**105-0023 (JP)**

(72) Inventors:
- **Seki, Hayato**
  **Tokyo, 105-0023 (JP)**
- **Hotta, Yasuyuki**
  **Tokyo, 105-0023 (JP)**
- **Matsuno, Shinsuke**
  **Tokyo, 105-0023 (JP)**

(74) Representative: **Hoffmann Eitle**
**Patent- und Rechtsanwälte PartmbB**
**Arabellastraße 30**
**81925 München (DE)**

# (54) BATTERY, BATTERY PACK, VEHICLE, AND STATIONARY POWER SUPPLY

(57) According to one approach, a battery is provided. The battery includes: a positive electrode; a first aqueous electrolyte held by the positive electrode; a negative electrode; a second aqueous electrolyte held by the negative electrode; at least one separator interposed between the positive electrode and the negative electrode; and a third aqueous electrolyte held by the separator, in which at least one of the type of salt, the concentration of salt, the pH, and the osmotic pressure of the third aqueous electrolyte is different from both those of the first aqueous electrolyte and those of the second aqueous electrolyte.

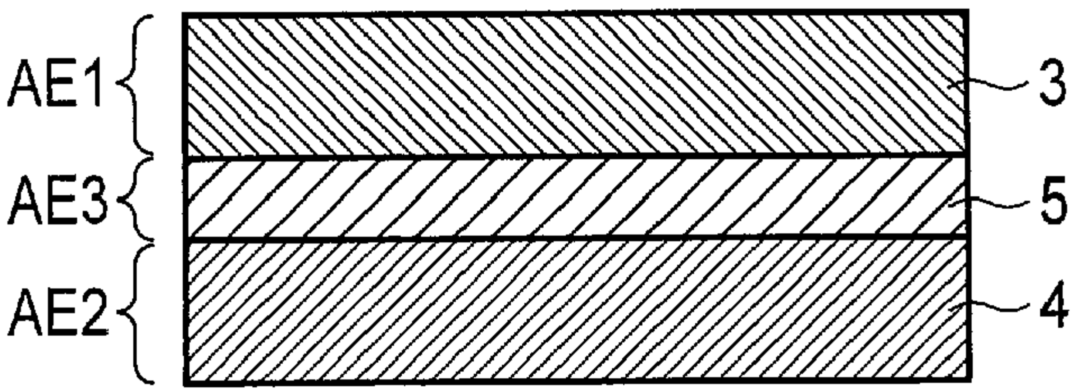


FIG. 1

EP 3 883 012 A1

## Description

FIELD

The present disclosure relates generally to a battery, a battery pack, a vehicle, and a stationary power supply.

BACKGROUND

A nonaqueous electrolyte battery formed by using a carbon material or a lithium titanium oxide as a negative electrode active material and a layered oxide that contains nickel, cobalt or manganese as a positive electrode active material, particularly a secondary battery has already been in practical use as a power source in a wide range of fields. Such a nonaqueous electrolyte battery is provided in a variety of forms, such as small-sized batteries for various electronic devices and large-sized batteries for electric vehicles. As an electrolyte of the secondary battery, a nonaqueous organic solvent prepared by mixing ethylene carbonate, methylethyl carbonate and the like is used, different from a nickel-hydrogen battery or a lead storage battery. An electrolyte prepared using the solvent has a high oxidation resistance and a high reduction resistant property compared to those of an aqueous electrolyte, whereby electrolysis of the solvent hardly occurs. Thus, in the case of a nonaqueous secondary battery, a high electromotive force of from 2 V to 4.5 V is attained.

On the other hand, many of the organic solvents are flammable materials, and thus the safety of the battery tends to be inferior to a battery using an aqueous solution, in principle. Although various measures have been taken to improve the safely of the battery using the organic solvent-based electrolyte, the measures are not necessarily sufficient. Furthermore, for the nonaqueous battery, a dry environment is necessary in the production process, and thus the production cost is inevitably increased. In addition, the organic solvent-based electrolyte is inferior in conductivity, and thus the internal resistance of the nonaqueous battery tends to be increased. These problems have been big issues in applications to an electric automobile and a hybrid electric automobile in which the battery safety and the battery cost are emphasized, and in applications to a large-sized storage battery for electricity storage.

In order to solve the problems of the nonaqueous battery, a battery using an aqueous solution electrolyte has been proposed. In an aqueous solution electrolyte, however, since lithium ion insertion/extraction potential of a lithium titanium oxide is about 1.5 V (vs. $Li/Li^+$) relative to a lithium reference potential, electrolysis of the aqueous solution electrolyte tends to occur. In particular, at the negative electrode, hydrogen is vigorously generated by electrolysis that occurs on the surface of a negative electrode current collector or a metal outer can that is electrically connected to the negative electrode. Thus, active materials can be easily exfoliated from the current collector under the influence of the hydrogen generation. As a result, the operation of the battery is not stable, and it is problematic in ensuring sufficient charging and discharging.

BRIEF DESCRIPTION OF THE DRAWINGS

FIG. 1 is a schematic structural view of a battery according to a first approach;
FIG. 2A is a schematic structural view of a separator included in the battery according to the first approach;
FIG. 2B is a schematic structural view of a separator included in the battery according to the first approach;
FIG. 2C is a schematic structural view of a separator included in the battery according to the first approach;
FIG. 2D is a schematic structural view of a separator included in the battery according to the first approach;
FIG. 3 is a partially cutaway cross-sectional view of the battery according to the first approach when used as a secondary battery;
FIG. 4 is a side view of the battery in FIG. 3;
FIG. 5 is a partially cutaway perspective view of the battery according to the first approach when used as a secondary battery;
FIG. 6 is an enlarged cross-sectional view of section A in FIG. 5;
FIG. 7 is a perspective view showing an example of a battery module according to a second approach;
FIG. 8 is a perspective view showing an example of a battery pack according to a third approach;
FIG. 9 is an exploded perspective view of another example of the battery pack according to the third approach;
FIG. 10 is a block diagram showing an electric circuit of the battery pack in FIG. 9;
FIG. 11 is a cross-sectional view schematically showing an example of a vehicle according to a fourth approach;
FIG. 12 is a diagram schematically showing another example of the vehicle according to the fourth approach; and
FIG. 13 is a block diagram showing an example of a system including a stationary power supply according to a fifth approach.

DETAILED DESCRIPTION

The battery according to the approach includes: a positive electrode; a first aqueous electrolyte held by the positive electrode; a negative electrode; a second aqueous electrolyte held by the negative electrode; at least one separator interposed between the positive electrode and the negative electrode; and a third aqueous electrolyte held by the separator, in which at least one of the type of salt, the concentration of salt, the pH, and the osmotic pressure of the third aqueous electrolyte is different from both those of the first aqueous electrolyte and those of the second aqueous electrolyte.

According to at least one of the approaches described herein, it is possible to provide a battery that can demonstrate excellent storage performance and cycle performance.

(First approach)

A battery according to a first approach will be described using FIG. 1. FIG. 1 is a schematic structural view of the battery in the first approach. The battery according to the first approach includes a positive electrode 3, a first aqueous electrolyte AE1 held by the positive electrode 3, a negative electrode 4, a second aqueous electrolyte AE2 held by the negative electrode 4, at least one separator 5 interposed between the positive electrode 3 and the negative electrode 4, and a third aqueous electrolyte AE3 held by the separator 5, in which at least one of the type of salt, the concentration of salt, the pH, and the osmotic pressure of the third aqueous electrolyte AE3 is different from both those of the first aqueous electrolyte AE1 and those of the second aqueous electrolyte AE2. The battery according to the present approach can be also used as a secondary battery. Thus, the battery according to the present approach when used as a secondary battery will be described in detail below.

When an aqueous electrolyte is used in a secondary battery, electrolysis of water may occur as a side reaction of the aqueous electrolyte. In electrolysis of water, a reaction represented by formula (1) occurs at a negative electrode, and a reaction represented by formula (2) occurs at a positive electrode.

$$2H^+ + 2e^- \rightarrow H_2 \qquad (1)$$

$$2H_2O \rightarrow O_2 + 4H^+ + 4e^- \qquad (2)$$

In an oxidation-reduction reaction of an aqueous electrolyte such as electrolysis of water, there are a potential window in which decomposition by an oxidation reaction does not occur and a potential window in which decomposition by a reduction reaction does not occur. For example, in electrolysis of water, according to Nernst equation, when a relationship represented by formula (3) exists with respect to a negative electrode potential E1, hydrogen tends to be generated at a negative electrode by a reduction reaction. On the other hand, when a relationship represented by formula (4) exists with respect to a positive electrode potential E2, oxygen tends to be generated at a positive electrode by an oxidation reaction. Here, pH in formula (3) and formula (4) refers to pH of the aqueous electrolyte.

$$E1 < -0.059 \times pH \quad (3)$$

$$E2 > 1.23 - 0.059 \times pH \quad (4)$$

It is known from formula (3) and formula (4) that a thermodynamic potential window in which an aqueous electrolyte stays stable does not depend on pH and constant (1.23 V). However, when different aqueous electrolytes are used for a positive electrode and a negative electrode, in which an aqueous electrolyte that is resistant to oxidation, that is, an acidic aqueous electrolyte is used for the positive electrode and an aqueous electrolyte that is resistant to reduction, that is, an basic aqueous electrolyte is used for the negative electrode, it is possible to achieve a thermodynamic potential window of the whole aqueous electrolyte of the battery of 1.23 V or more. Thus, in a secondary battery, the following aqueous electrolytes may be sometimes used: the positive electrode side aqueous electrolyte and the negative electrode side aqueous electrolyte are different in pH from each other. However, when the positive electrode side aqueous electrolyte and the negative electrode side aqueous electrolyte are simply different from each other, it is difficult to prevent transfers of the positive electrode side aqueous electrolyte and the negative electrode side aqueous electrolyte in a separator. This is because an osmotic pressure is generated to each of the aqueous electrolytes, and water molecules may be transferred through the separator. The transfer of water molecules may cause mixing of ions such as cations and anions gradually by the principle of increase of entropy.

To achieve a further high battery voltage, an aqueous electrolyte having a high electrolyte salt concentration

is sometimes used for a positive electrode, and an aqueous electrolyte having a low electrolyte salt concentration is sometimes used for a negative electrode. In a secondary battery, each of the reaction potentials at the positive electrode and the negative electrode are defined by each of the electrolyte salt concentrations in the aqueous electrolytes. Specifically, when the electrolyte salt concentration is high, a reaction proceeds under a high reaction potential, and when the electrolyte salt concentration is low, a reaction proceeds under a low reaction potential. Even when the difference in aqueous electrolyte concentration between the positive electrode side and the negative electrode side is large, the osmotic pressure of the positive electrode side aqueous electrolyte and the osmotic pressure of the negative electrode side aqueous electrolyte can be nearly equalized by applying osmotic pressures. However, when the osmotic pressures are equalized, a lot of agents are added to the aqueous electrolyte having a low electrolyte salt concentration to regulate the osmotic pressures. Thus, lithium ion conductivity is reduced, and there is a room for improvement as a battery.

In the battery according to the present approach, a third aqueous electrolyte in which at least one of the type of salt, the concentration of salt, the pH, and the osmotic pressure is different from both those of the first aqueous electrolyte and those of the second aqueous electrolyte is used. Thus, any of the type of salt, the concentration of salt, the pH, and the osmotic pressure of the third aqueous electrolyte is necessarily different from those of the first aqueous electrolyte, and any of the type of salt, the concentration of salt, the pH, and the osmotic pressure of the third aqueous electrolyte is necessarily different from those of the second aqueous electrolyte.

When any of the types of salt, the concentrations of salt, the pH, and the osmotic pressures are different between the first aqueous electrolyte and the second aqueous electrolyte, the types of salt, the concentrations of salt, the pH, and the osmotic pressures tend to approach an equilibrium state between the first aqueous electrolyte and the second aqueous electrolyte, that is, tend to become equal or close to each other. Specifically, when any of the types of salt, the concentrations of salt, and pH (concentration of $H^+$) are different, by the principle of increase of entropy, corresponding ions are transferred, and the concentrations of the corresponding ions tend to become equal. Further, when osmotic pressures are different, water molecules in the electrolytes are transferred to allow the osmotic pressures to be equal. Thus, among the first aqueous electrolyte and the second aqueous electrolyte having different types of salt, concentrations of salt, pH, and osmotic pressures, the types of salt, the concentrations of salt, the pH, and the osmotic pressures tend to become an equilibrium state, and transfer of water molecules or corresponding ions becomes easy. In this state, mixing of the first aqueous electrolyte and the second aqueous electrolyte becomes easy. Thus, when any of the type of salt, the concentration of salt, the pH, and the osmotic pressure of the third aqueous electrolyte, which exists between the first aqueous electrolyte on the positive electrode side and the second aqueous electrolyte on the negative electrode side, is different from both those of the first aqueous electrolyte and those of the second aqueous electrolyte, the osmotic pressures of the first aqueous electrolyte and third aqueous electrolyte can be made closer and the osmotic pressures of the second aqueous electrolyte and the third aqueous electrolyte can be made closer. Accordingly, the third aqueous electrolyte plays a role in preventing mixing of the first aqueous electrolyte and the second aqueous electrolyte.

In summary, in the separator, the third aqueous electrolyte is mixed with each of the first aqueous electrolyte and the second aqueous electrolyte. As a result, the following state can be virtually made: osmotic pressure of the first aqueous electrolyte $\approx$ osmotic pressure of the third aqueous electrolyte $\approx$ osmotic pressure of the second aqueous electrolyte. In addition, with respect to ion concentrations of the cations and the anions, the following states can be virtually made: ion concentration of the first aqueous electrolyte $\approx$ ion concentration of the third aqueous electrolyte $\approx$ ion concentration of the second aqueous electrolyte.

In detail, when the osmotic pressure of the third aqueous electrolyte is close to those of the first and the second aqueous electrolytes, transfer of water molecules due to the osmotic pressure difference can be prevented. The transfer of water molecules becomes more difficult as the osmotic pressure difference is smaller. Thus, for example, the mobility of water molecules from the second aqueous electrolyte to the third aqueous electrolyte is lower than the mobility of the water molecules from the second aqueous electrolyte to the first aqueous electrolyte. Likewise, the mobility of water molecules from the first aqueous electrolyte to the third aqueous electrolyte is lower than the mobility of water molecule from the first aqueous electrolyte to the second aqueous electrolyte. Thus, variations in proton concentrations and ion concentrations contained in the first aqueous electrolyte and the second aqueous electrolyte can be reduced, and the first aqueous electrolyte and the second aqueous electrolyte can be maintained in a state that is suitable for battery operation.

In addition, since the separator is impregnated with the third aqueous electrolyte, the third aqueous electrolyte exist in the separator more steadily than an electrolyte that permeates the separator by capillary phenomenon generally when a battery is assembled. Thus, as compared to the case in which only the first and the second aqueous electrolytes are used, mixing of the first aqueous electrolyte and the second aqueous electrolyte included in the battery according to the present approach is difficult to proceed. Thus, by preventing the time dependent mixing of the first aqueous electrolyte and the second aqueous electrolyte, decreases in cycle deterioration and coulombic efficiency can be prevented. Since the coulombic efficiency represents the slope of a self-discharge curve, this shows that when the coulombic efficiency decreases, storage performance also decreases.

A method for manufacturing a battery according to the present approach will be briefly described.

The battery according to the present approach is manufactured as follows. On an electric insulating plate (e.g., plastics), a positive electrode having an uncoated portion for current collection is fixed, a first electrolyte is dropped, and then a separator that has been impregnated with a third electrolyte in advance is disposed thereon and brought into close contact therewith. On the separator, a second electrolyte is dropped, a negative electrode is placed thereon and brought into close contact therewith, and a plastic plate is placed thereon and fixed with a screw. When a repeated stacked structure is formed, a positive electrode, a first aqueous electrolyte, a separator impregnated with a third electrolyte, a second aqueous electrolyte, a negative electrode, a separator impregnated with a third electrolyte, a positive electrode, and a first aqueous electrolyte,... are repeatedly stacked to form the repeated stacked structure, and a plastic plate is placed at the end and fixed with a screw. In the third aqueous electrolyte, at least one of the type of salt, the concentration of salt, the pH, and the osmotic pressure is different from both those of the positive electrode side aqueous electrolyte and those of the negative electrode side aqueous electrolyte. In the separator, an electrolyte (the third aqueous electrolyte) having an osmotic pressure that is close to the osmotic pressure of each of the electrolytes of an electrolyte on the positive electrode side (the first aqueous electrolyte) and an electrolyte on the negative electrode side (the second aqueous electrolyte) can be achieved. The impregnation of the separator with the third electrolyte is, for example, performed under the following conditions: at 25°C, evacuation until about $10^{-1}$ Pa, and standing for 24 hours or more.

Materials for the respective members that can be used in the battery according to the first approach will be described in detail.

1) Negative Electrode

The negative electrode includes a negative electrode current collector, and a negative electrode active material layer disposed on the negative electrode current collector. The negative electrode active material layer is disposed on at least one surface of the negative electrode current collector. For example, the negative electrode active material layer may be disposed on one of the surfaces of the negative electrode current collector, or the negative electrode active material layers may be arranged on one of the surfaces of the negative electrode current collector and the back surface thereof.

The negative electrode active material layer includes a negative electrode active material containing at least one compound selected from the group consisting of a titanium oxide, a lithium titanium oxide, and a lithium titanium composite oxide. These oxides may be used alone or in combination of two or more. In these oxides, Li insertion and extraction reaction occurs within a range of 1 V or more and 2 V or less (vs. $Li/Li^+$) relative to a lithium reference potential. For this reason, when these oxides described above are used as the negative electrode active material of the secondary battery, the change in volume due to expansion and contraction, which accompany charge and discharge, is small, and thus the life of the secondary battery is extended.

It is preferred that at least one element selected from the group consisting of Zn, Ga, In, Bi, Tl, Sn, Pb, Ti, and Al is contained in the negative electrode current collector. Hereinafter, these elements may be also referred to as elements A. These elements may be used alone, or a plurality of the elements may be used in combination. These elements may be contained as metals or as an alloy of the metals. The metals and alloy of the metals may be contained alone or as a mixture of two or more. When the elements are contained in the current collector, the mechanical strength of the current collector is increased, and thus the workability is improved. Further, electrolysis of an aqueous solvent is prevented, and the effect of preventing hydrogen generation can be increased. Among the elements described above, Zn, Pb, Ti, and Al are more preferred.

The current collector is, for example, a metal foil made from these metals. The current collector is, for example, a foil made from an alloy containing these metals. The foil may contain, for example, one of elements described below or two or more of the elements, in addition to the element A. Examples of the form of the metal body include a mesh and a porous body, besides the foil. For improving the energy density and output, the foil, which has a small volume and a large surface are, is desired.

The negative electrode current collector may include a substrate containing a metal that is different from the element A. In this case, since there is a compound containing the element A on at least a part of the surface of the substrate, the hydrogen generation can be prevented. The compound containing the element A that is present on the surface is preferably arranged so as to be in contact with the negative electrode active material layer. For example, plating of the element A can be applied to the substrate, and thereby the compound containing the element A can be provided on the surface of the substrate. Alternatively, plating treatment using an alloy containing the element A can be applied to the surface of the substrate.

The current collector may include at least one compound selected from the elements A. An oxide of the element A, and/or a hydroxide of the element A, and/or a basic carbonate compound of the element A, and/or a sulfate compound of the element A are preferably included in at least a part of the surface region of the current collector within a depth region of 5 nm or more and 1 μm or less in the depth direction from the surface. Examples of the oxide of element A include ZnO, examples of the hydroxide of element A include $Zn(OH)_2$, examples of the basic carbonate compound of

element A include $2ZnCO_3 \cdot 3Zn(OH)_2$, and examples of the sulfate compound of element A include $ZnSO_4 \cdot 7H_2O$.

When at least one of the oxide of the element A, the hydroxide of the element A, the basic carbonate compound of the element A, and the sulfate compound of the element A is present in the surface layer portion of the current collector, hydrogen generation can be prevented. In addition, when these compounds are present in the surface layer portion of the current collector, the adhesion among the current collector, the active material, a conductive agent, and a binder is improved, and electronic conduction paths can be increased. Thus, it is possible to improve the cycle performance and reduce the electrical resistance.

The substrate preferably contains at least one metal selected from the group consisting of Al, Fe, Cu, Ni, and Ti. These metals may be contained as an alloy. The substrate may contain the metal and metal alloy alone or as a mixture of two or more. From the standpoint of weight reduction, the substrate preferably contains Al, Ti, or an alloy thereof.

Whether or not the current collector includes at least one compound selected from the elements A can be examined by disassembling the battery as described above, and then performing inductively coupled plasma (ICP) emission spectrometry.

The negative electrode active material includes one compound or two or more compounds selected from the group consisting of a titanium oxide, a lithium titanium oxide, and a lithium titanium composite oxide. Examples of the lithium titanium composite oxide include a niobium titanium oxide and a sodium niobium titanium oxide. The compounds desirably have a Li insertion potential within a range of 1 V (vs. $Li/Li^+$) or more and 3 V (vs. $Li/Li^+$) or less.

The titanium oxide includes, for example, a titanium oxide having a monoclinic structure, a titanium oxide having a rutile structure, and a titanium oxide having an anatase structure. For titanium oxides of these crystal structures, the composition before charge can be expressed as $TiO_2$, and the composition after charge can be expressed as $Li_xTiO_2$ ($0 \leq x$). In addition, the structure of titanium oxide having a monoclinic structure before charge can be expressed as $TiO_2(B)$.

Examples of the lithium titanium oxide include a lithium titanium oxide having a spinel structure (e.g., $Li_{4+x}Ti_5O_{12}$ ($-1 \leq x \leq 3$) ; and a lithium titanium oxide having a ramsdellite structure (e.g., $Li_{2+x}Ti_3O_7$ ($-1 \leq x \leq 3$), $Li_{1+x}Ti_2O_4$ ($0 \leq x \leq 1$), $Li_{1.1+x}Ti_{1.8}O_4$ ($0 \leq x \leq 1$), $Li_{1.07+x}Ti_{1.86}O_4$ ($0 \leq x \leq 1$), and $Li_xTiO_2$ ($0 < x \leq 1$).

Examples of the niobium titanium oxide include a niobium titanium oxide represented by $Li_aTiM_bNb_{2\pm\beta}O_{7\pm\sigma}$ ($0 \leq a \leq 5$, $0 \leq b \leq 0.3$, $0 \leq \beta \leq 0.3$, $0 \leq \sigma \leq 0.3$, where M is at least one kind of elements selected from the group consisting of Fe, V, Mo, and Ta).

Examples of the sodium niobium titanium oxide include an orthorhombic Na-containing niobium titanium composite oxide represented by $Li_{2+v}Na_{2-w}M1_xTi_{6-y-z}Nb_yM2_zO_{14+\delta}$ ($0 \leq v \leq 4$, $0 \leq w < 2$, $0 \leq x < 2$, $0 \leq y < 6$, $0 \leq z < 3$, $-0.5 \leq \delta \leq 0.5$, M1 includes at least one selected from Cs, K, Sr, Ba, and Ca, and M2 includes at least one selected from Zr, Sn, V, Ta, Mo, W, Fe, Co, Mn, and Al.

Examples of the compound preferred as the negative electrode active material include a titanium oxide having an anatase structure, a titanium oxide having a monoclinic structure, and a lithium titanium oxide having a spinel structure. These compounds have a Li insertion potential of from 1.4 V (vs. $Li/Li^+$) to 2 V (vs. $Li/Li^+$) . Thus, each of them is used in combination with, for example, a lithium manganese oxide as the positive electrode active material so that a high electromotive force can be obtained. The lithium titanium oxide having a spinel structure is preferred because it exhibits little volume change in the charge-discharge reaction.

The negative electrode active material layer contains a negative electrode active material, for example, in the form of particles. Negative electrode active material particles may be single primary particles, secondary particles which are aggregates of the primary particles, or a mixture of single primary particles and secondary particles. The shape of the particles is not particularly limited, and may be, for example, a spherical shape, an elliptical shape, a flat shape or a fibrous shape.

The average particle size (diameter) of the secondary particle of the negative electrode active material is preferably 3 $\mu$m or more. More preferably, the average particle size is 5 $\mu$m or more and 20 $\mu$m or less. When the average particle size is within this range, the surface area of the active material is large, and thus the effect of preventing hydrogen generation can be increased.

The negative electrode active material having secondary particles with an average particle size of 3 $\mu$m or more is produced by, for example, the following method. First, an active material precursor having an average particle size of 1 $\mu$m or less is produced by the synthesis of raw materials of the active material. Thereafter, the active material precursor is sintered and the resulting product is ground using a grinder such as a ball mill or jet mill. After that, the active material precursor is aggregated in the sintering process so that the secondary particles are grown to have a large particle size.

The average particle size of the primary particles of the negative electrode active material is desirably 1 $\mu$m or less. This reduces the diffusion length of Li ions in the active material and increases the specific surface area. Therefore, high input performance (rapid charging performance) can be achieved. On the other hand, when the average particle size is small, the particles can be easily aggregated. As a result, a larger amount of the electrolyte may be distributed to the negative electrode, and consequently the electrolyte may be exhausted at the positive electrode. Thus, the lower limit of the average particle size is desirably 0.001 $\mu$m. The average particle size is more preferably 0.1 $\mu$m or more and

0.8 μm or less.

The negative electrode active material particles preferably have a specific surface area of 3 $m^2/g$ or more and 200 $m^2/g$ or less as determined by a BET method employing $N_2$ deposition. This can further increase the affinity between the negative electrode and the electrolyte.

The negative electrode active material layer (excluding the current collector) desirably has a specific surface area of 3 $m^2/g$ or more and 50 $m^2/g$ or less. The specific surface area is more preferably 5 $m^2/g$ or more and 50 $m^2/g$ or less. The negative electrode active material layer may be a porous layer including the negative electrode active material, the conductive agent, and the binder, and may be supported on the current collector.

The porosity of the negative electrode (excluding the current collector) is preferably within a range of from 20% to 50%. Accordingly, it is possible to produce a negative electrode having an excellent affinity of the negative electrode for the electrolyte solution and a high density. More preferably, the porosity is within a range of from 25% to 40%.

Examples of the conductive agent include carbon materials such as acetylene black, carbon black, coke, carbon fiber, and graphite, and powders of a metal such as nickel or zinc. The conductive agent may be used alone or in combination of two or more. Since the carbon material generates hydrogen in itself, it is desirable to use the metal powder as the conductive agent.

Examples of the binder include polytetrafluoroethylene (PTFE), polyvinylidene fluoride (PVdF), fluorine based rubber, ethylene butadiene rubber, polypropylene (PP), polyethylene (PE), carboxymethylcellulose (CMC), polyimide (PI), and polyacrylimide (PAI). The binder may be used alone or in combination of two or more.

With respect to the mixing ratios of the negative electrode active material, the conductive agent, and the binder in the negative electrode active material layer, the mixing ratio of the negative electrode active material is preferably in a range of 70 wt% or more and 95 wt% or less, the mixing ratio of the conductive agent is preferably in a range of 3 wt% or more and 20 wt% or less, and the mixing ratio of the binder is preferably in a range of 2 wt% or more and 10 wt% or less. When the mixing ratio of the conductive agent is 3 wt% or more, the conductivity of the negative electrode can be improved. When the mixing ratio is 20 wt% or less, decomposition of the electrolyte on the surface of the conductive agent can be reduced. When the mixing ratio of the binder is 2 wt% or more, sufficient electrode strength can be obtained. When the mixing ratio is 10 wt% or less, an insulating portion of the electrode can be decreased.

The negative electrode can be produced, for example, as follows. First, the negative electrode active material, the conductive agent, and the binder are dispersed in an appropriate solvent to prepare a slurry. Next, the slurry is applied to the current collector, and the coating film is dried to form the negative electrode active material layer on the current collector. Here, for example, the slurry may be applied to one surface of the current collector, or may be applied to one of the surfaces of the current collector and the back surface thereof. Then, the current collector and the negative electrode active material layer may be subjected to pressing such as heat pressing to produce the negative electrode.

2) Positive Electrode

The positive electrode may include a positive electrode current collector, and a positive electrode layer that include an active material, a conductive agent, and a binder and may be supported on one of the surfaces or both of the surfaces of the positive electrode current collector.

As the positive electrode current collector, it is preferred to use a foil, a porous body, or a mesh made from a metal such as stainless steel, Al, or Ti. In order to prevent corrosion of the current collector caused by the reaction of the current collector with the electrolyte, the surface of the current collector may be coated with dopant.

A positive electrode active material allowing lithium or sodium to be inserted thereinto and extracted therefrom may be used. The positive electrode may contain one kind or two or more kinds of positive electrode active materials. Examples of the positive electrode active material include a lithium manganese composite oxide, a lithium nickel composite oxide, a lithium cobalt aluminum composite oxide, a lithium nickel cobalt manganese composite oxide, a spinel type lithium manganese nickel composite oxide, a lithium manganese cobalt composite oxide, a lithium iron oxide, a fluorinated lithium iron sulfate, and a phosphate compound having an olivine crystal structure (e.g., $Li_xFePO_4$ ($0 < x \leq 1$), $Li_xMnPO_4$ ($0 < x \leq 1$)). The phosphate compound having an olivine crystal structure is excellent in thermal stability.

Examples of the positive electrode active material by which a high positive electrode potential is obtained will be described below. Examples thereof include $Li_xMn_2O_4$ ($0 < x \leq 1$) having a spinel structure, a lithium manganese composite oxide (e.g., $Li_xMnO_2$ ($0 < x \leq 1$)), a lithium nickel aluminum composite oxide (e.g., $Li_xNi_{1-y}Al_yO_2$ ($0 < x \leq 1,0 < y < 1$)), a lithium cobalt composite oxide (e.g., $Li_xCoO_2$ ($0 < x \leq 1$), a lithium nickel cobalt composite oxide (e.g., $Li_xNi_{1-y-z}CO_yMn_zO_2$ ($0 < x \leq 1,0 < y < 1, 0 \leq z < 1$), a lithium manganese cobalt composite oxide (e.g., $Li_xMn_yCo_{1-y}O_2$ ($0 < x \leq 1, 0 < y < 1$), a spinel type lithium manganese nickel composite oxide (e.g., $Li_xMn_{2-y}Ni_yO_4$ ($0< x \leq 1, 0< y < 2$)), a lithium phosphorus oxide having an olivine structure (e.g., $Li_xFePO_4$ ($0 < x \leq 1$), $Li_xFe_{1-y}Mn_yPO_4$ ($0 < x \leq 1, 0 \leq y \leq 1$), $Li_xCoPO_4$ ($0 < x \leq 1$)), and a fluorinated iron sulfate (e.g., $Li_xFeSO_4F$ ($0 < x \leq 1$)).

Examples include a sodium manganese composite oxide, a sodium nickel composite oxide, a sodium cobalt composite oxide, a sodium nickel cobalt manganese composite oxide, a sodium iron composite oxide, sodium phosphorus

oxide (e.g., sodium iron phosphate, sodium vanadium phosphate), a sodium iron manganese composite oxide, a sodium nickel titanium composite oxide, a sodium nickel iron composite oxide, and a sodium nickel manganese composite oxide.

Preferred examples of the positive electrode active material include an iron composite oxide (e.g., $Na_yFeO_2$, $0 \leq y \leq 1$), an iron manganese composite oxide (e.g., $Na_yFe_{1-x}Mn_xO_2$, $0 < x < 1$, $0 \leq y \leq 1$), a nickel titanium composite oxide (e.g., $Na_yNi_{1-x}Ti_xO_2$, $0 < x < 1$, $0 \leq y \leq 1$), a nickel iron composite oxide (e.g., $Na_yNi_{1-x}Fe_xO_2$, $0 < x < 1, 0 \leq y \leq 1$), a nickel manganese composite oxide (e.g., $Na_yNi_{1-x}Mn_xO_2$, $0 < x < 1$, $0 \leq y \leq 1$), a nickel manganese iron composite oxide (e.g., $Na_yNi_{1-x-z}Mn_xFe_zO_2$, $0 < x < 1, 0 \leq y \leq 1$, $0 < z < 1$, $0 < 1-x-z < 1$), and an iron phosphate (e.g., $Na_yFePO_4$, $0 \leq y \leq 1$).

The positive electrode active material particles may be single primary particles, secondary particles which are aggregates of the primary particles, or may include single primary particles and secondary particles. The primary particles of the positive electrode active material preferably have an average particle size (diameter) of 10 μm or less, more preferably of 0.1 μm to 5 μm. The secondary particles of the positive electrode active material preferably have an average particle size (diameter) of 100 μm or less, more preferably of 10 μm to 50 μm.

It is preferred that at least a part of the particle of the positive electrode active material is coated with a carbon material. The carbon material may be in the form of a layered structure, a particulate structure, or a form of aggregated particles.

As the conductive agent for increasing the electron conductivity of the positive electrode layer and suppressing the contact resistance between the positive electrode layer and the current collector, examples include acetylene black, carbon black, graphite, and carbon fiber having an average fiber diameter of 1 μm or less. The conductive agent may be used alone or in combination of two or more.

Examples of the binder for binding the active material and the conductive agent include polytetrafluoroethylene (PTFE), polyvinylidene fluoride (PVdF), fluorine based rubber, stylene butadiene rubber (SBR), polypropylene (PP), polyethylene (PE), carboxymethylcellulose (CMC), polyimide (PI), and polyacrylimide (PAI). The binder may be used alone or in combination of two or more.

With respect to the mixing ratios of the positive electrode active material, the conductive agent, and the binder in the positive electrode layer, the mixing ratio of the positive electrode active material is preferably in a range of 70 wt% or more and 95 wt% or less, the mixing ratio of the conductive agent is in a range of preferably 3 wt% or more and 20 wt% or less, and the mixing ratio of the binder is preferably in a range of 2 wt% or more and 10 wt% or less. When the mixing ratio of the conductive agent is 3 wt% or more, the conductivity of the positive electrode can be improved. When the mixing ratio is 20 wt% or less, decomposition of the electrolyte on the surface of the conductive agent can be reduced. When the mixing ratio of the binder is 2 wt% or more, sufficient electrode strength can be obtained. When the mixing ratio is 10 wt% or less, an insulating portion of the electrode can be decreased.

The positive electrode can be produced, for example, as follows. First, the positive electrode active material, the conductive agent, and the binder are dispersed in an appropriate solvent to prepare a slurry. Next, the slurry is applied to the current collector, and the coating film is dried to form the positive electrode layer on the current collector. Here, for example, the slurry may be applied to one surface of the current collector, or may be applied to one of the surfaces of the current collector and the back surface thereof. Then, the current collector and the positive electrode layer may be subjected to pressing such as heat pressing to produce the positive electrode.

3) Separator

A separator may be disposed between the positive electrode and the negative electrode. It is sufficient that at least one separator is present between the positive electrode and the negative electrode. Thus, a plurality of the separators may be directly stacked on each other and the stacked layers may be provided between the positive electrode and the negative electrode, or the separator and another member may be laminated and the laminate may be provided between the positive electrode and the negative electrode. When the separator is constituted of an insulating material, electrical contact between the positive electrode and the negative electrode can be prevented. In addition, it is desirable to use a separator having a shape that allows electrolyte to move between the positive electrode and the negative electrode. Examples of the separator include non-woven fabrics, films, and paper. Examples of a constitution material of the separator include polyolefins such as polyethylene and polypropylene; and cellulose. Preferable examples of the separator include cellulose fiber-containing non-woven fabrics and polyolefin fiber-containing porous films.

The separator preferably has a porosity of 60% or more. The fiber diameter is preferably 10 μm or less. When the fiber diameter is 10 μm or less, the affinity of the separator with an electrolyte is enhanced, so that battery resistance can be reduced. The fiber diameter is more preferably 3 μm or less. A cellulose fiber containing nonwoven fabric having a porosity of 60% or more can be well impregnated with the electrolyte, and can exhibit a high output performance at from a low temperature to a high temperature. In addition, even during storage for a long time in a charged state, during float charging, or when exposed to overcharge, the separator does not react with the negative electrode, and a short-circuit between the negative electrode and the positive electrode due to precipitation of dendrite of lithium metal does

not occur. The porosity is more preferably in a range of 62% to 80%.

The separator preferably has a thickness in a range of 20 μm or more and 100 μm or less, and a density in a range of 0.2 $g/cm^3$ or more and 0.9 $g/cm^3$ or less. Within these ranges, the mechanical strength and the reduction of battery resistance can be well-balanced, and a secondary battery having a high output and having a suppressed internal short-circuit can be provided. In addition, there is a reduced thermal contraction of the separator under a high temperature environment, and storage performance under a high temperature becomes good.

The separator preferably has an air permeability coefficient of $1 \times 10^{-14}$ $m^2$ or less. When the air permeability coefficient is larger than $1 \times 10^{-14}$ $m^2$, the positive electrode side aqueous electrolyte and the negative electrode side aqueous electrolyte are mixed with each other, and the aqueous electrolyte having a smaller osmotic pressure tends to be lost, which is unfavorable. The air permeability coefficient is more preferably $1 \times 10^{-15}$ $m^2$ or less, and still more preferably $1 \times 10^{-16}$ $m^2$ or less. The separator having such an air permeability coefficient can kinetically sufficiently prevent the mixing of the positive electrode side aqueous electrolyte and the negative electrode side aqueous electrolyte, and thus the coulombic efficiency is improved, which is favorable. This is because the separator is sufficiently impregnated with the aqueous electrolyte to reduce the resistance of the separator and increase the ion conductivity, and thus the rate performance is improved. Although the separator is well impregnated with the aqueous electrolytes, the aqueous electrolytes on the positive electrode side and the negative electrode side may not be mixed with each other.

The air permeability coefficient ($m^2$) is calculated as follows. In the calculation of the air permeability coefficient KT, for example, when a separator having a thickness of L (m) is used as a measuring object, a gas having a viscosity coefficient σ (Pa·s) is transmitted through the separator within a measurement area A ($m^2$). In the measurement, the gas is transmitted through the separator under a plurality of conditions in which pressures p (Pa) of the gas to be supplied are different from each other, and quantities Q ($m^3$/s) of the gas transmitted through the separator under the plurality of conditions are measured. From the measurement results, plots of the gas quantities Q versus the pressures p are made, and dQ/dp, which means the slope, is obtained. Then the air permeability coefficient KT is calculated from the thickness L, the measurement area A, the viscosity coefficient σ, and the slope dQ/dp according to formula (5) .

[Numerical formula 1]

$$KT = ((\sigma \cdot l) / A) \times (dQ / dp) \qquad (5)$$

An example of methods for calculating the air permeability coefficient KT is as follows. A separator is sandwiched between a pair of stainless steel plates each having a hole having a diameter of 10 mm. From the hole of the one stainless steel plate, air is supplied with a pressure p. Then, gas quantity Q of the air escaped from the hole of the other stainless steel plate is measured. Thus, the area of the hole (25n $mm^2$) is applied as the measurement area A, and 0.000018 Pa·s is applied as the viscosity coefficient σ. The gas quantity Q is calculated by measuring the amount of air δ ($m^3$) escaped from the hole within 100 seconds, and dividing the amount δ measured above by 100.

Under 4 conditions with different pressures p that are apart from each other by at least 1000 Pa, gas quantities Q at the pressures p are measured as described above. For example, under 4 conditions with pressures p of 1000 Pa, 2500 Pa, 4000 Pa, and 6000 Pa, gas quantities Q at the pressures p are measured. Then, plots of the gas quantities Q measured under the 4 conditions versus the pressures p are made, and dQ/dp, which means the slope of the plotted curve of the gas quantities Q versus the pressures p, is obtained by linear fitting (least-squares method). The slope (dQ/dp) obtained above is multiplied by (σ·L)/A to calculate the air permeability coefficient KT.

The measurement of the air permeability coefficient of a separator of a battery is performed as follows. The battery is disassembled and the separator is separated from other components of the battery. Both of the surfaces of the separator are washed with pure water, then the separator is immersed in pure water and left to stand for 48 hours or more. Thereafter, the both surfaces are further washed with pure water, dried in a vacuum drying oven at 100°C for 48 hours or more, and then the air permeability coefficient is measured. Here, the air permeability coefficients at a plurality of random portions of the separator are measured. Then, the lowest air permeability coefficient value among the air permeability coefficient values obtained at the plurality of random portions is designated as an air permeability coefficient of the separator.

As a separator, inorganic solid particles can also be used.

The inorganic solid particles can be used as the separator in the form of a solid electrolyte membrane including the inorganic solid particles and a polymer material. As the separator, a composite solid electrolyte membrane in which the solid electrolyte membrane is applied to at least one main surface of a porous self-supported film such as the above-described nonwoven fabric or paper can also be used. Each of the solid electrolyte membrane and the porous self-supported film can contain the third aqueous electrolyte.

The separator may be a porous self-supported film or a solid electrolyte membrane, or may be a composite solid electrolyte membrane including a solid electrolyte membrane on at least one main surface of a porous self-supported

film. The separator may be a laminated body formed of two or more selected from a porous self-supported film, a solid electrolyte membrane, and a composite solid electrolyte membrane. The third aqueous electrolyte can be contained in the overall composite solid electrolyte membrane.

The solid electrolyte membrane can contain inorganic solid particles and a polymer material. The solid electrolyte membrane may further contain a plasticizer and/or an electrolyte salt.

Examples of the porous self-supported film include nonwoven fabric, a porous film including organic fibers, paper, etc.

As the separator, the above-described materials may be used alone or in combination of two or more. Herein, a case in which the solid electrolyte membrane and the composite solid electrolyte membrane are used as the separator will be specifically described using FIG. 2. FIG. 2 is a schematic structural view of the separator in the battery according to the first approach. FIG. 2A represents a case in which only the solid electrolyte membrane is used as the separator. FIG. 2B represents a case in which a composite solid electrolyte membrane A having the solid electrolyte membrane formed on one of the main surfaces of the porous self-supported film is used as the separator, and FIG. 2C represents a case in which a composite solid electrolyte membrane B having solid electrolyte membranes formed on both of the main surfaces of the porous membrane is used as the separator, and FIG. 2D represents a case in which a laminate in which a plurality of composite solid electrolyte membranes A are laminated is used as the separator. Examples of the separator include, in addition to those described above, a separator in which the composite solid electrolyte membrane A and the composite solid electrolyte membrane B are laminated, a separator in which the composite electrolyte membranes B are laminated, and a separator in which the solid electrolyte membrane, the composite solid electrolyte membrane A, and/or the composite solid electrolyte membrane B are laminated. That is, the solid electrolyte membrane, the composite solid electrolyte membrane A, and the composite solid electrolyte membrane B may be used in an appropriate combination. The solid electrolyte membrane is preferably present on the negative electrode side or on the second aqueous electrolyte side.

In the composite solid electrolyte membrane, the characters "A" and "B" in the composite solid electrolyte membrane A and the composite solid electrolyte membrane B are used for convenience in description.

By using the above-described separators in combination, the diffusion length that contributes to mixing of the positive electrode electrolyte and the negative electrode electrolyte is increased and, furthermore, the possibility of occurring a micro-short-circuit is reduced such that cycle performance and storage performance are improved. It is particularly preferred that a separator in which, as shown in FIG. 2D, the solid electrolyte is applied to both of the main surfaces of the porous self-supported film to form solid electrolyte membranes on both surfaces of the porous self-supported film is used. By using this separator, the middle substrate (porous membrane) portion can be sufficiently impregnated with the third aqueous electrolyte, and contact of each of the positive electrode and the negative electrode with the electrolyte can be minimized. Thus, a high cycle performance can be achieved.

Here, the inorganic solid particles and the polymer material included in the solid electrolyte membrane will be described in detail.

Examples of the inorganic solid particles include oxide ceramics such as alumina, silica, zirconia, yttria, magnesium oxide, calcium oxide, barium oxide, strontium oxide, and vanadium oxide; carbonates and sulfates such as sodium carbonate, potassium carbonate, magnesium carbonate, calcium carbonate, barium carbonate, lanthanum carbonate, cerium carbonate, calcium sulfate, magnesium sulfate, aluminum sulfate, gypsum, and barium sulfate; phosphates such as hydroxylapatite, lithium phosphate, zirconium phosphate, and titanium phosphate; and nitride ceramics such as silicon nitride, titanium nitride, and boron nitride. The above-listed inorganic particles may be in hydrate form.

The inorganic solid particles preferably have alkali metal-ion ion conductivity. Examples of the inorganic solid particles having lithium ion conductivity include an oxide-based solid electrolyte or a sulfide-based solid electrolyte. As the oxide-based solid electrolyte, a lithium phosphate solid electrolyte having a sodium (Na) super ionic conductor (NASICON) structure and represented by a general formula LiM2(PO4)3 is preferably used. M in the above-described general formula is, for example, at least one element selected from the group consisting of titanium (Ti), germanium (Ge), strontium (Sr), zirconium (Zr), tin (Sn), aluminum (Al), and calcium (Ca). The ionic conductivity of the lithium phosphate solid electrolyte represented by the general formula $LiM_2(PO_4)_3$ is, for example, $1 \times 10^{-7}$ S/cm or more and $1 \times 10^{-3}$ S/cm or less.

Specific examples of the lithium phosphate solid electrolyte having the NASICON structure include LATP ($Li_{1+x+y}Al_x$ (at least one of Ti and Ge) $_{2-x}Si_yP_{3-y}O_{12}$, in which $0 < x \leq 2$, and $0 \leq y < 3$) ; $Li_{1+x}Al_xGe_{2-x}(PO_4)_3$, in which $0 \leq x \leq 2$; $Li_{1+x}Al_xZr_{2-x}(PO_4)_3$, in which $0 \leq x \leq 2$; and $Li_{1+2x}Zr_{1-x}Ca_x(PO_4)_3$, in which $0 \leq x < 1$. The electrolyte represented by $Li_{1+2x}Zr_{1-x}Ca_x(PO_4)_3$ is highly water resistant, low in reduction property, and low in cost, and thus preferably used as the inorganic solid electrolyte particle.

Examples of the oxide-based solid electrolyte include, in addition to the above-described lithium phosphate solid electrolytes, LIPON ($Li_{2.9}PO_{3.3}N_{0.46}$) in an amorphous state, $La_{5+x}A_xLa_{3-x}M_2O_{12}$ (A is at least one selected from the group consisting of Ca, Sr, and Ba, and M is at least one of Nb and Ta) having a garnet structure, and $Li_3M_{2-x}L_2O_{12}$ (M is at least one of Ta and Nb, and L is Zr), $Li_{7-3x}Al_xLa_3Zr_3O_{12}$, and LLZ ($Li_7La_3Zr_2O_{12}$). The solid electrolyte may be

used alone or in combination of two or more. The ionic conductivity of LIPON is, for example, $1 \times 10^{-7}$ S/cm or more and $5 \times 10^{-6}$ S/cm or less. The ionic conductivity of LLZ is, for example, $1 \times 10^{-7}$ S/cm or more and $5 \times 10^{-4}$ S/cm or less.

As the inorganic solid particles having sodium-ion ion conductivity, a sodium-containing solid electrolyte may be used. The sodium-containing solid electrolyte is superior in the sodium-ion ion conductivity. Examples of the sodium-containing solid electrolyte include β-alumina, sodium phosphorus sulfide, and sodium phosphorus oxide. The sodium ion-containing solid electrolyte is preferably in a glass-ceramic form.

The inorganic solid particles preferably are a solid electrolyte having a lithium ion conductivity of $1 \times 10^{-7}$ S/cm or more at 25°C. The lithium ion conductivity can be measured by, for example, an alternate current impedance method. The lithium ion conductivity can be measured specifically as follows. First, the inorganic solid particles are shaped using a tableting machine to obtain a compressed powder pellet. Both of the surfaces of the compressed powder pellet are coated with evaporated gold (Au) to obtain a measurement sample. The alternate current impedance of the measurement sample is measured using impedance measuring equipment. As a measuring equipment, for example, a frequency response analyzer model 1260 manufactured by Solartron can be used. The measurement is performed at a measuring frequency of 5 Hz to 32 MHz and a measuring temperature of 25°C under argon atmosphere.

Next, based on the measured alternate current impedance, complex impedance plots are made. The complex impedance plots are plots with a horizontal axis as the real part and a vertical axis as the imaginary part. Then, the ionic conductivity $\sigma_{Li}$ of the inorganic solid particles is calculated by the following formula. In the following formula, $Z_{Li}$ is a value of resistance calculated from the diameter of the circular arc of the complex impedance plots, S is an area, and d is a thickness.

[Numerical formula 2]

$$\sigma_{Li} = (1 / Z_{Li}) \times (d / S) \qquad (6)$$

The shape of the inorganic solid particle is not particularly limited and can be, for example, spherical, elliptical, flat, or fibrous.

The average particle size of the inorganic solid particles is preferably 15 μm or less, and more preferably 12 μm or less. When the average particle size of the inorganic solid particles is small, the fineness of the solid electrolyte membrane can be increased.

The average particle size of the inorganic solid particles is preferably 0.01 μm or more, and more preferably 0.1 μm or more. When the average particle size of the inorganic solid particles is large, aggregation of the particles tends to be inhibited.

The average particle size of the inorganic solid particles means a particle size with which a volume integrated value becomes 50% in a particle size distribution obtained by a laser diffraction particle size distribution measurement apparatus. As a sample used when performing the particle size distribution measurement, a dispersion obtained by diluting the inorganic solid particles by ethanol such that the concentration of the inorganic solid particles becomes 0.01 mass% to 5 mass% is used.

One type of the inorganic solid particle may be used alone, or two or more type of the inorganic solid particles may be used as a mixture.

In the solid electrolyte membrane, the inorganic solid particles preferably are a main component. The ratio of the inorganic solid particles in the solid electrolyte membrane is, from the standpoint of improving the ion conductivity of the solid electrolyte membrane, preferably 70 mass% or more, more preferably 80 mass% or more, and still more preferably 85 mass% or more.

The ratio of the inorganic solid particles in the solid electrolyte membrane is, from the standpoint of improving the membrane strength of the solid electrolyte membrane, preferably 98 mass% or less, more preferably 95 mass% or less, and still more preferably 90 mass% or less. The ratio of the inorganic solid particles in the solid electrolyte membrane can be calculated by thermogravimetric (TG) analysis.

The polymer material included in the solid electrolyte membrane improves the binding property between the inorganic solid particles. The weight-average molecular weight of the polymer material is, for example, 3000 or more. When the weight-average molecular weight of the polymer material is 3,000 or more, the binding property of the inorganic solid particles can be further improved. The weight-average molecular weight of the polymer material is preferably 3,000 or more and 5,000,000 or less, more preferably 5,000 or more and 2,000,000 or less, and still more preferably 10,000 or more and 1,000,000 or less. The weight-average molecular weight of the polymer material can be obtained by gel permeation chromatography (GPC).

The polymer material can be a polymer containing one type of monomer unit, a copolymer containing a plurality of monomer units, or a mixture thereof. The polymer material preferably contains a monomer unit that includes a hydrocarbon having a functional group containing one element or two or more elements selected from the group consisting

of oxygen (O), sulfur (S), nitrogen (N), and fluorine (F). In the polymer material, a portion that is constituted by the monomer unit preferably accounts for 70 mol% or more of the polymer material. Hereinafter, this monomer unit is referred to as a first monomer unit. In the copolymer, a monomer unit other than the first monomer unit is referred to as a second monomer unit. A copolymer of the first monomer unit and the second monomer unit may be an alternating copolymer, a random copolymer, or a block copolymer.

In the polymer material, when a portion that is constituted by the first monomer unit accounts for less than 70 mol% of the polymer material, the water barrier property of the solid electrolyte membrane may be decreased. In the polymer material, a portion that is constituted by the first monomer unit preferably accounts for 90 mol% or more of the polymer material. In the polymer material, a portion that is constituted by the first monomer unit most preferably accounts for 100 mol% of the polymer material. That is, a polymer that consists only of the first monomer unit is most preferred.

The first monomer unit may be a compound having a side chain that includes a functional group containing one element or two or more elements selected from the group consisting of oxygen (O), sulfur (S), nitrogen (N), and fluorine (F), and a main chain that is constituted by a carbon-carbon bond. The hydrocarbon may include one functional group or two or more functional groups containing one element or two or more elements selected from the group consisting of oxygen (O), sulfur (S), nitrogen (N), and fluorine (F). The above-described functional group in the first monomer unit improves the conductivity of an alkali metal ion that passes through the solid electrolyte membrane.

The hydrocarbon that constitutes the first monomer unit preferably includes a functional group containing at least one element selected from the group consisting of oxygen (O), sulfur (S), and nitrogen (N). When the first monomer unit includes the functional group, the alkali metal ion conductivity of the solid electrolyte membrane is further improved, and the internal resistance tends to be decreased.

As the functional group included in the first monomer unit, at least one selected from the group consisting of a formal group, a butyral group, a carboxymethyl ester group, an acetyl group, a carbonyl group, a hydroxyl group, and a fluoro group is preferred. The first monomer unit preferably contains at least one of a carbonyl group and a hydroxyl group in the functional group, and more preferably contains both.

The first monomer unit can be represented by the following formula.

[Chem. 1]

$$-\!\left[CR_1R_2\text{-}CR_1R_2\right]_n\!-$$

In the formula, $R_1$ is preferably selected from the group consisting of hydrogen (H), an alkyl group, and an amino group. $R_2$ is preferably selected from the group consisting of a hydroxyl group (-OH), $-OR_1$, $-COOR_1$, $-OCOR_1$, $-OCH(R_1)O-$, -CN, $-N(R_1)_3$, and $-SO_2R_1$.

Examples of the first monomer unit include at least one unit or two or more units selected from the group consisting of vinyl formal, vinyl alcohol, vinyl acetate, vinyl acetal, vinyl butyral, acrylic acid, and a derivative thereof; methacrylic acid and a derivative thereof; acrylonitrile, acrylamide, and a derivative thereof; and styrenesulfonic acid, polyvinylidene fluoride, and tetrafluoroethylene.

The polymer material preferably contains at least one selected from the group consisting of polyvinyl formal, polyvinyl alcohol, polyvinyl acetal, polyvinyl butyral, polymethyl methacrylate, polyvinylidene fluoride, and polytetrafluoroethylene.

Examples of the structural formula of a compound that can be used as the polymer material are provided below.

The structural formula of the polyvinyl formal is as follows. In the following formula, a is preferably 50 or more and 80 or less, b is preferably 0 or more and 5 or less, and c is preferably 15 or more and 50 or less.

[Chem. 2]

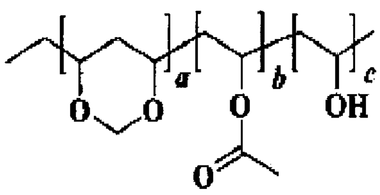

The structural formula of the polyvinyl butyral is as follows. In the following formula, 1 is preferably 50 or more and 80 or less, m is preferably 0 or more and 10 or less, and n is preferably 10 or more and 50 or less.

[Chem. 3]

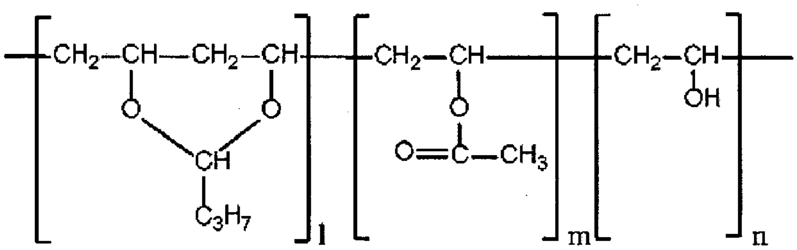

The structural formula of the polyvinyl alcohol is as follows. In the following formula, n is preferably 70 or more and 20000 or less.

[Chem. 4]

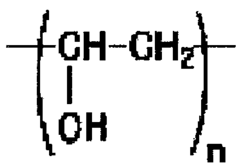

The structural formula of the polymethyl methacrylate is as follows. In the following formula, n is preferably 30 or more and 10000 or less.

[Chem. 5]

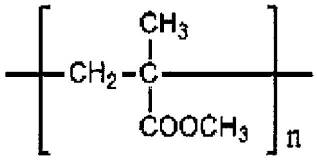

The second monomer unit refers to a compound other than the first monomer unit, that is, a compound that does not have a functional group containing one element or two or more elements selected from the group consisting of oxygen (O), sulfur (S), nitrogen (N), and fluorine (F), or a compound, even if the compound contains the functional group, that is other than a hydrocarbon. Examples of the second monomer unit include ethylene oxide and styrene. Examples of a polymer containing the second monomer unit include polyethylene oxide (PEO) and polystyrene (PS).

The type of a functional group contained in the first monomer unit and the second monomer unit can be identified by infrared spectroscopy (Fourier transform infrared spectroscopy (FT-IR)). Whether or not the first monomer unit is constituted by a hydrocarbon can be determined by nuclear magnetic resonance (nuclear magnetic resonance (NMR). In a copolymer of the first monomer unit and the second monomer unit, the proportion of a portion that is constituted by the first monomer unit can be calculated by NMR.

The polymer material can contain an aqueous electrolyte. The content of the aqueous electrolyte that can be contained in the polymer material can be determined by water absorption of the polymer material. Here, the water absorption of the polymer material can be represented by a value that is obtained as follows. The polymer material is immersed in water at a temperature of 23°C for 24 hours, and the mass of the polymer material after the water immersion is denoted by mass M1. The mass of the polymer material before the water immersion is denoted by mass M. The mass M is subtracted from the mass M1, and the value (M1-M) is divided by the mass M of the polymer material before the water immersion to obtain the value that represents the water absorption ($[M1-M]/M \times 100$). It is thought that the water absorption of the polymer material relates to the polarity of the polymer material.

When a polymer material having a high water absorption is used, the alkali metal ion conductivity of the solid electrolyte membrane tends to be increased. When a polymer material having a high water absorption is used, binding capacity between the inorganic solid particles and the polymer material is increased, and thus flexibility of the solid electrolyte membrane can be increased. The water absorption of the polymer material is preferably 0.01% or more, more preferably 0.5% or more, and still more preferably 2% or more.

When a polymer material having a low water absorption is used, the strength of the solid electrolyte membrane can be increased. That is, when the water absorption of the polymer material is too high, the solid electrolyte membrane may swell with the aqueous electrolyte. In addition, when the water absorption of the polymer material is too high, the polymer material in the solid electrolyte membrane may be eluted in the aqueous electrolyte. The water absorption of the polymer material is preferably 15% or less, more preferably 10% or less, still more preferably 7% or less, and particularly preferably 3% or less.

The content of the polymer material in the solid electrolyte membrane is, from the standpoint of increasing the flexibility of the solid electrolyte membrane, preferably 1 mass% or more, more preferably 3 mass% or more, and still more preferably 10 mass% or more.

The content of the polymer material in the solid electrolyte membrane is, from the standpoint of increasing the lithium ion conductivity of the solid electrolyte membrane, preferably 20 mass% or less, more preferably 10 mass% or less, and still more preferably 5 mass% or less. The content of the polymer material in the solid electrolyte membrane can be calculated by thermogravimetric (TG) analysis.

In the solid electrolyte membrane, the air permeability coefficient of the separator can be decreased by increasing the content of the polymer material in the solid electrolyte membrane. Alternatively, the air permeability coefficient of the obtained separator can be decreased by increasing the amount of slurry for forming the solid electrolyte membrane to be applied to the porous self-supported film.

With respect to the polymer material included in the solid electrolyte membrane, one type of the polymer material may be used alone or two or more types of the polymer materials may be used as a mixture.

The solid electrolyte membrane may include a plasticizer and an electrolyte salt in addition to the inorganic solid particles and the polymer material. For example, when the solid electrolyte membrane includes an electrolyte salt, alkali metal ion conductivity of the separator can be further improved.

4) Aqueous electrolyte

Examples of the aqueous electrolyte include a liquid aqueous electrolyte containing an aqueous solvent and the electrolyte A, and a gel aqueous electrolyte in which the aqueous electrolyte is combined with a polymer material. The first, second, and third aqueous electrolytes may be sometimes collectively described as aqueous electrolytes. Examples of the above-described polymer material include polyvinylidene fluoride (PVdF), polyacrylonitrile (PAN), and polyethylene oxide (PEO). Here, the aqueous electrolyte will be described. The aqueous electrolyte contains at least one anion selected from the group consisting of $NO_3^-$, $Cl^-$, $LiSO4^-$, $SO_4^{2-}$, and $OH^-$. One type of the anion may be contained in the aqueous electrolyte, or two or more types of the anions may be contained. Thus, as the electrolyte A, a material that splits and produces the above-described anion when dissolved in an aqueous solvent can be used. In particular, a salt that splits into a Li ion or a Na ion and the above-described anion is preferred. Examples of the salt include $LiNO_3$, LiCl, $Li_2SO_4$, LiOH, and lithium bis(trifluoro methanesulfonyl)imide (LiTFSI).

Herein, to distinguish the aqueous electrolyte as a general term for the liquid aqueous electrolyte and the gel aqueous electrolyte from an electrolyte (salt) as a solute, the electrolyte as a solute is referred to as an electrolyte A for reasons of expediency.

As the aqueous solvent, a solution including water can be used. Here, the solution including water may be pure water, or a mixed solution or a mixed solvent of water and materials other than water. The content of water included in the aqueous solvent is, for example, 50 vol% or more, and preferably 90 vol% or more.

In the aqueous electrolyte, it is preferred that the amount of water solvent (e.g., the amount of water in the aqueous solvent) is 1 mol or more relative to 1 mol of salt that serves as a solute. More preferably, the amount of water solvent is 3.5 mol or more with respect to 1 mol of salt that serves as a solute.

The lithium salt that splits into a Li ion and the above-described anion has a relatively high solubility in the aqueous solvent. Thus, an aqueous electrolyte that has a high anion concentration of 1 to 10 M and has a favorable Li ion diffusibility can be obtained.

The aqueous electrolyte containing $NO_3^-$ and/or $Cl^-$ can be used within a broad anion concentration range of about 0.1 to 10 M. From the standpoint of both ionic conductivity and lithium equilibrium potential, it is preferred that these anions have a high concentration of 3 to 12 M. More preferably, the anion concentration in the aqueous electrolyte containing $NO_3^-$ or $Cl^-$ is 8 to 12 M.

The electrolyte containing $LiSO_4^-$ and/or $SO_4^{2-}$ can be used within an anion concentration range of about 0.05 to 2.5 M. Preferably, from the standpoint of ionic conductivity, the concentration of these anion is as high as 1.5 to 2.5 M.

The aqueous electrolyte desirably has an $OH^-$ concentration of $10^{-10}$ to 0.1 M. The aqueous electrolyte preferably has a pH of 1 or more and 14 or less.

The aqueous electrolyte may contain both lithium ions and sodium ions.

The electrolyte A used for the first aqueous electrolyte, the second aqueous electrolyte, and the third aqueous electrolyte can be suitably selected from the above-described electrolytes A.

An additive may be added to the aqueous electrolyte. For example, a surfactant may be added. Examples of the surfactant include nonionic surfactants such as polyoxyalkylene alkyl ether, polyethylene glycol, polyvinyl alcohol, thio urea, disodium 3,3'-dithiobis(1-propanephosphate), dimercaptothiadiazole, boric acid, oxalic acid, malonic acid, saccharin, sodium naphthalene sulfonate, gelatin, potassium nitrate, aromatic aldehyde, and heterocyclic aldehyde. The surfactant may be used alone or as a mixture of two or more. In addition, the added metal may be present in the aqueous electrolyte as an ion or as a solid. It is preferred that different additives are used for each of the electrolyte on the positive electrode side, the electrolyte on the negative electrode side, and the aqueous electrolyte contained in the separator. The additive contained in the aqueous electrolyte on the negative electrode side is preferably a material that can be used for a coating of, for example, zinc on the negative electrode. The additive contained in the aqueous electrolyte contained in the separator is preferably a material that can reduce the surface tension of the surface of the separator, and can promote impregnation of the separator with the aqueous electrolyte.

Whether or not the surfactant is contained in the aqueous electrolyte can be analyzed by using the above-described GC-MS as follows. For example, the aqueous electrolyte is subjected to hexane extraction, and the organic solvent is separated from the aqueous electrolyte. The separated organic solvent is subjected to GC-MS and nuclear magnetic resonance measurement (NMR) to specify the surfactant. The added metal can be analyzed by ICP.

The interfacial tension of the aqueous electrolyte is preferably 80 mN/m or less. When the interfacial tension is within this range, the aqueous electrolyte can be impregnated into the separator. The interfacial tension is more preferably 50 mN/m or less, and still more preferably 40 mN/m or less.

The method for measuring interfacial tension will be described below.

<Method for measuring interfacial tension of aqueous electrolyte>

The interfacial tension of the aqueous electrolyte can be measured, for example, by a hanging drop method. As a measuring equipment, for example, an automatic contact angle meter Dme-201 manufactured by Kyowa Interface Science Co., Ltd. can be used. As measurement conditions, for example, the conditions shown in Table 1 are used.

[Table 1]

| Interfacial tension measurement conditions | |
|---|---|
| Measurement interval (ms): | 1000 |
| Number of times: | 21 |
| Fit interval: | 60 |
| End point interval (dot): | 30 |
| Wait time before measurement (ms): | 10000 |
| Algorithm: | Auto |
| Image mode: | Frame |
| Auto threshold level: | Yes |
| Black level (%): | 70 |
| Threshold level: | 128 |
| Image processing area left: | 30 |
| Image processing area top: | 30 |
| Image processing area right: | 30 |
| Image processing area bottom: | 30 |
| Auto droplet adhesion recognition: | Yes |
| Droplet adhesion recognition line (dot) : | 50 |
| Curvature correction: | No |
| Curvature radius (μm) : | 1000000 |
| Control mode: | Standard |
| Auto droplet creation: | Yes |
| Liquid amount control: | Yes |
| Created liquid amount (μL): | 2 |
| Auto droplet adhesion operation: | Yes |
| Auto sample table movement: | Yes |
| Reciprocation: | No |
| Measuring movement interval (mm): | 6 |

(continued)

| Interfacial tension measurement conditions | |
|---|---|
| Number of times of repetition: | 10 |

For the calculation of the interfacial tension, a hanging drop method is used. The interfacial tension of the aqueous electrolyte is calculated by the following formula (7) .

$$\text{Interfacial tension (mN/M)} = \Delta\rho g de2(1/H) \cdots (7)$$

The symbols in formula (7) are as follows:
$\Delta\rho$ : difference in density, g: gravitational acceleration, de: the maximum diameter of hanging drop, 1/H: correction factor.
For example, the measurement is repeated 5 times, and the average value of the five measurements is considered as the interfacial tension.

<Method for measuring contact angle of aqueous electrolyte>

The contact angle of the aqueous electrolyte can be obtained by, for example, a sessile drop method. As a measuring equipment, for example, an automatic contact angle meter Dme-201 manufactured by Kyowa Interface Science Co., Ltd. can be used. As measurement conditions, for example, the conditions shown in Table 2 are used.

[Table 2]

| Contact angle measurement conditions | |
|---|---|
| Measurement interval (ms): | 1000 |
| Number of times: | 21 |
| Analysis technique: | Sessile drop |
| Analysis method: | Standard |
| Three-state system: | No |
| Fit interval designation: | No |
| Fit interval: | 60 |
| End point interval (dot): | 30 |
| Wait time before measurement (ms): | 10000 |
| Algorithm: | Auto |
| Image mode: | Frame |
| Auto threshold level: | Yes |
| Black level (%): | 70 |
| Threshold level: | 128 |
| Image processing area left: | 30 |
| Image processing area top: | 30 |
| Image processing area right: | 30 |
| Image processing area bottom: | 30 |
| Auto droplet adhesion recognition: | Yes |
| Droplet adhesion recognition line (dot) : | 50 |
| Curvature correction: | No |
| Curvature radius (μm): | 1000000 |
| Control mode: | Standard |
| Auto droplet creation: | Yes |
| Liquid amount control: | Yes |
| Created liquid amount (μL): | 2 |
| Auto droplet adhesion operation: | Yes |
| Auto sample table movement: | Yes |

(continued)

| Contact angle measurement conditions | |
|---|---|
| Reciprocation: | No |
| Measuring movement interval (mm): | 6 |
| Number of times of repetition: | 10 |
| Auto liquid sample switching measurement: | 0 |
| Solid sample replacement: | No |
| Liquid amount unit: | μL |
| Permitted range mode: | No |
| Permitted range lower limit: | 0 |
| Permitted range upper limit: | 180 |
| Stage control mode: | 1 |

As described above, when the osmotic pressure of the third aqueous electrolyte is different from the osmotic pressures of the first aqueous electrolyte and the osmotic pressures of the second aqueous electrolyte, the first aqueous electrolyte is prevented from being mixed with the second aqueous electrolytes.

Thus, any one of the following is preferred: osmotic pressure of the first aqueous electrolyte < osmotic pressure of the third aqueous electrolyte < osmotic pressure of the second aqueous electrolyte, or osmotic pressure of the first aqueous electrolyte > osmotic pressure of the third aqueous electrolyte > osmotic pressure of the second aqueous electrolyte.

It is more preferred that the absolute value of the difference between the osmotic pressures of the third aqueous electrolyte and the first aqueous electrolyte, and the absolute value of the difference between the osmotic pressures of the third aqueous electrolyte and the second aqueous electrolyte are 2 or less. This is because when the third aqueous electrolyte is similar to each of the first aqueous electrolyte and the second aqueous electrolyte, transfer of protons and ions can be more effectively prevented.

Here, the osmotic pressure $\Pi$ ($N/m^2$) can be calculated as follows. When the solvent volume of the aqueous electrolyte is denoted by V ($m^3$), the amount of a solute (the total number of moles) in the aqueous electrolyte is denoted by n (mol), the gas constant is denoted by R ($m^2 \cdot kg/(s^2 \cdot K \cdot mol)$), and the absolute temperature of the aqueous electrolyte is denoted by T(K), the osmotic pressure $\Pi$ can be calculated by the following formula (8).

$$\Pi = (n \cdot R \cdot T)/V \quad (8)$$

As described above, the aqueous electrolyte preferably has a pH of 1 or more and 14 or less. Here, the pH that is suitable for each of the first aqueous electrolyte, the second aqueous electrolyte, and the third aqueous electrolyte will be specifically described. The first aqueous electrolyte preferably has a pH of 1 or more and 7 or less. When the pH of the first aqueous electrolyte, which is a positive electrode side aqueous electrolyte, is 8 or more, the oxygen generation reaction due to electrolysis of water preferentially proceeds. When the pH is lower than pH 1, decomposition of the active material proceeds, and ion exchange between lithium in the positive electrode active material and dissolved proton occurs, leading to deactivation, which is unfavorable.

The second aqueous electrolyte preferably has a pH of 7 or more and 14 or less. When the pH of the second aqueous electrolyte, which is an aqueous electrolyte for the negative electrode, is less than 7, the hydrogen generation reaction due to electrolysis of water preferentially proceeds, which is not preferred.

As described above, when the pH of the third aqueous electrolyte is different from the pH of the first aqueous electrolyte and the pH of the second aqueous electrolyte, the third aqueous electrolyte is prevented from being mixed with the first and second aqueous electrolytes. Thus, any one of the following is preferred: pH of the first aqueous electrolyte < pH of the third aqueous electrolyte < pH of the second aqueous electrolyte, or pH of the second aqueous electrolyte < pH of the third aqueous electrolyte < pH of the first aqueous electrolyte.

The third aqueous electrolyte may contain a buffer agent. The buffer agent is not particularly limited as long as the buffer agent can prevent transfer of an ion from the first aqueous electrolyte to the second aqueous electrolyte and from the second aqueous electrolyte to the first aqueous electrolyte. The buffer agent is, for example, a weak acid. Specific examples include glycine, phosphoric acid, phthalic acid, citric acid, barbituric acid, succinic acid, acetic acid, carbonic acid, boric acid, N-2-hydroxyethylpiperazine-N'-2-ethanesufonic acid, an acetate buffer solution (acetic acid + sodium acetate), a phosphate buffer solution (phosphoric acid + sodium phosphate), a citrate buffer solution (citric acid

+ sodium phosphate), a borate buffer solution, a tartrate buffer solution, a tris buffer solution, phosphate buffered saline, a McIlvaine buffer solution, and (4-(2-hydroxyethyl)-1-piperazineethanesulfonic acid (HEPES)).

When the acid dissociation constant of the buffer agent, which is a weak acid used herein, is denoted by pKa ([HA] ↔ [$H^+$] + [$A^-$]), the pH can be represented as follows: pH = pKa + log([$A^-$]/[HA]). Unlike a strong acid in which most of the acid is ionized, about a half of the weak acid is generally ionized, and thus the following equation is considered to be satisfied: [$A^-$] = [HA] = 0.5, that is, log([$A^-$]/[HA]) = 0. Thus, the following relationship can be considered to exist: pH = pKa.

The buffer agent effectively carries out its function at a pH that is almost the same as the acid dissociation constant (pKa) ± 1 of the weak acid used. Thus, it is more preferred to select the third aqueous electrolyte containing a buffer agent having a pKa (or pKa2, pKa3) of about ± 1 of the pH of the aqueous electrolyte for the positive electrode or the negative electrode. That is, the following formula is satisfied: (pH of the first aqueous electrolyte or pH of the second aqueous electrolyte) - 1 < pKa1 (or pKa2, pKa3) of the buffer agent < (pH of the first aqueous electrolyte or pH of the second aqueous electrolyte) + 1. Which of the buffer agents having pKa1, pKa2, and pKa3 is used is determined according the upper-lower relationship between the pH of the first aqueous electrolyte and the pH of the second aqueous electrolyte. In addition, it is also preferred that the acid dissociation constant pKa of the buffer agent satisfies the following formula: pH of the electrolyte contained in the first aqueous electrolyte < pKa1 (or pKa2, pKa3) of the buffer agent < pH of the second aqueous electrolyte. In this case, while transfer of ions from the first aqueous electrolyte to the second aqueous electrolyte and from the second aqueous electrolyte to the first aqueous electrolyte can be prevented, improvement in storage performance and improvement in cycle performance can be achieved.

In the present specification and claims, the values of pH and pKa of the aqueous electrolyte means values of pH and pKa at 25°C.

The electrolyte A and the buffer agent contained in the aqueous electrolyte can be specified according to the following methods.

<Method for specifying aqueous electrolyte>

From a completely discharged battery, a positive electrode side aqueous electrolyte (first aqueous electrolyte), a negative electrode side aqueous electrolyte (second aqueous electrolyte), and a separator are retrieved. An aqueous electrolyte contained in the separator (third aqueous electrolyte) can be obtained using a centrifuge.

The first to third aqueous electrolytes obtained above are subjected to hexane extraction, and then the organic solvents in the aqueous electrolytes are isolated. Thus, a buffer agent of the organic compound that is eluted into the organic solvent and a buffer agent of the inorganic compound that stays is the aqueous electrolyte can be separated. The organic solvent isolated above is subjected to gas chromatography-mass spectrometry (gas chromatography-mass spectrometry (GC-MS) and nuclear magnetic resonance measurement (nuclear magnetic resonance (NMR) to specify the buffer agent of the organic compound contained in the aqueous electrolyte.

The buffer agent of the inorganic compound is specified by analyzing the aqueous electrolyte by ICP.

Whether or not the separator contains the third aqueous electrolyte can be specified as follows. The most abundant electrolyte A among the aqueous electrolytes contained in the separator is considered as an electrolyte A of the third aqueous electrolyte.

Similarly, using the aqueous electrolyte contained in the separator obtained by using the centrifuge, concentration of salt, pH, and osmotic pressure can be specified.

The solutes in the first to third aqueous electrolytes, that is, electrolytes A can be analyzed quantitatively and qualitatively by ion chromatography. The ion chromatography has a high sensitivity, and is particularly preferred as an analysis method.

When first aqueous electrolyte and the second aqueous electrolyte are analyzed, since the aqueous electrolyte that is held in the electrode and the aqueous electrolyte that is present around the electrode have the same composition, any one of them can be used.

Specific examples of measurement conditions for the qualitative and quantitative analysis of the solute contained in the aqueous electrolyte are provided below:

System: Prominence HIC-SP
Analysis column: Shim-pack IC-SA3
Guard column: Shim-pack IC-SA3(G)
Eluent: 3.6 mmol/L sodium carbonate an aqueous solution
Flow rate: 0.8 mL/min
Column temperature: 45°C
Injection volume: 50 μL
Detection: electric conductivity

Whether or not the aqueous electrolyte contains water can be examined by GC-MS spectrometry. Water content in the aqueous electrolyte can be calculated, for example, from emission spectrometry using ICP. In addition, the mole numbers of the solvent can be calculated from the measurement of specific gravity of the electrolyte. The same aqueous electrolytes may be used on both the positive electrode side and the negative electrode side, or different electrolytes may be used.

The added metal contained in the aqueous electrolyte can be examined by ICP.

Although the aqueous electrolyte before manufacturing the battery and the aqueous electrolyte obtained from the manufactured battery are slightly different from each other in the type of salt, the concentration of salt, the pH, and the osmotic pressure, the difference may not affect the storage performance and the cycle performance.

5) Container

As the container that receives the positive electrode, negative electrode, and electrolyte, a metal container, a laminate film container or a resin container which is made of polyethylene or polypropylene may be used.

As the metal container, a metal can which is made of nickel, iron or stainless steel and has a rectangular or cylindrical shape may be used.

The board thickness of each of the resin container and the metal container is desirably 1 mm or less and more preferably 0.5 mm or less. Still more preferably, the thickness is 0.3 mm or less. The lower limit of the board thickness is desirably 0.05 mm.

Examples of the laminate film include a multilayer film formed by covering a metal layer with a resin layer. Examples of the metal layer include a stainless steel foil, an aluminum foil, and an aluminum alloy foil. As the resin layer, a polymer such as polypropylene (PP), polyethylene (PE), nylon or polyethylene terephthalate (PET) may be used. The thickness of the laminate film is preferably 0.5 mm or less. More preferably, the thickness is 0.2 mm or less. The lower limit of the thickness of the laminate film is desirably 0.01 mm.

The battery according to the approach can be applied to batteries having various forms such as a rectangular shape, a cylindrical shape, a flat type, a thin type, and a coin type. In addition, the battery preferably has a bipolar structure. The battery having a bipolar structure is advantageous in producing a plurality of serial cells in a single cell.

An example of the battery according to the approach used as a secondary battery will be described in more detail with reference to FIG. 3 to FIG. 6.

An example of the secondary battery using a metal container is shown in FIG. 3 and FIG. 4.

An electrode group 1 is stored in a rectangular tubular metal container 2. The electrode group 1 has a structure formed by spirally winding a positive electrode 3 and a negative electrode 4 with a separator 5 interposing therebetween so as to form a flat shape. An electrolyte (not shown) is held by the electrode group 1. As shown in FIG. 4, a strip shaped positive electrode lead 6 is electrically connected to each of a plurality of portions at an end of the positive electrode 3 located on an end face of the electrode group 1. In addition, a strip shaped negative electrode lead 7 is electrically connected to each of a plurality of portions at an end of the negative electrode 4 located on the end face. The plurality of positive electrode leads 6 are electrically connected to a positive electrode electro-conduction tab 8 in a bundled state. A positive electrode terminal is composed from the positive electrode leads 6 and the positive electrode electro-conduction tab 8. In addition, the negative electrode leads 7 are electrically connected to a negative electrode electro-conduction tab 9 in a bundled state. A negative electrode terminal is composed from the negative electrode leads 7 and the negative electrode electro-conduction tab 9. A sealing plate 10 made of a metal is fixed to the opening portion of the metal container 2 by welding or the like. The positive electrode electro-conduction tab 8 and the negative electrode electro-conduction tab 9 are extracted to the outside from outlet holes provided in the sealing plate 10, respectively. The inner surface of each outlet hole of the sealing plate 10 is coated with an insulating member 11 to avoid a short circuit caused by contact between the positive electrode electro-conduction tab 8 and the negative electrode electro-conduction tab 9.

An example of the secondary battery using a laminate film container member is shown in FIG. 5 and FIG. 6.

A stack-type electrode group 1 is received in a bag-shaped container 2 formed of a laminate film including a metal layer interposed between two resin films. As shown in FIG. 6, the stack-type electrode group 1 has a structure in which the positive electrode 3 and the negative electrode 4 are alternately stacked with the separator 5 interposed therebetween. A plural of the positive electrodes 3 is present and each of them includes a current collector 3a and a positive active material containing layer 3b formed on both sides of the current collector 3a. A plural of negative electrodes 4 is present and each of them includes a current collector 4a and a negative electrode active material containing layer 4b formed on both sides of the current collector 4a. In the current collector 4a of each of the negative electrodes 4, one side is protruded from the positive electrode 3. The protruded current collector 4a is electrically connected to a band-shaped negative electrode terminal 12. The end of the band-shaped negative electrode terminal 12 is externally drawn from the container 2. Although not illustrated, in the current collector 3a of the positive electrode 3, one side located at the opposite side of the protruded side of the current collector 4a protrudes from the negative electrode 4. The current collector 3a protruded from the negative electrode 4 is electrically connected to a band-shaped positive electrode terminal

13. The end of the band-shaped positive electrode terminal 13 is located at the opposite side of the negative electrode terminal 12 and externally drawn from one side of the container 2.

Each of the secondary batteries shown in FIGS. 3 and 6 may have a safety valve that discharges the hydrogen gas generated in the container to the outside. The safety valve may be either a return control valve which operates when the internal pressure becomes higher than a set value and which functions as a sealing plug when the internal pressure decreases, or a non-return valve where once it is operated, its function as the sealing plug is not recovered. Each of the secondary batteries shown in FIGS. 3 to 6 is a closed type battery, and may be an open type battery in the case of including a circulation system that converts hydrogen gas to water.

According to the approach described above, the battery is provided. The battery includes: a positive electrode; a first aqueous electrolyte held by the positive electrode; a negative electrode; a second aqueous electrolyte held by the negative electrode; at least one separator interposed between the positive electrode and the negative electrode; and a third aqueous electrolyte held by the separator, in which at least one of the type of salt, the concentration of salt, the pH, and the osmotic pressure of the third aqueous electrolyte is different from both those of the first aqueous electrolyte and those of the second aqueous electrolyte. Since the battery has such a configuration, when used as a secondary battery, a secondary battery having excellent storage performance and cycle performance can be provided.

(Second approach)

According to the second approach, a battery module including a secondary battery as a unit cell can be provided. As the secondary battery, a battery of the first approach can be used.

Examples of the battery module include a battery module including a plurality of unit cells, as structural units, that are electrically connected to each other in series or in parallel, and a battery module including a unit constituted by a plurality of unit cells that are electrically connected in series or a battery module including a unit constituted by a plurality of unit cells that are electrically connected in parallel.

The battery module may be received in a cabinet. As the cabinet, a metal can which is made of an aluminum alloy, iron or stainless steel or a plastic container may be used. The thickness of the container is preferably 0.5 mm or more.

Examples of the form of serial or parallel electrical connection of a plurality of secondary batteries include serial or parallel electrical connection of a plurality of secondary batteries each having a container, and serial or parallel electrical connection of a plurality of secondary electrode groups received in a common cabinet. According to a specific example of the former, a plurality of secondary batteries whose positive and negative electrode terminals are connected by a metal bus bar (e.g., aluminum, nickel, copper). According to a specific example of the latter, a plurality of electrode groups are received in one cabinet with electrochemically insulated by a diaphragm, and these electrode groups are electrically connected in series. When the number of batteries that are electrically connected in series is in a range of 5 to 7, voltage compatibility with a lead storage battery becomes good. In order to further improve voltage compatibility with a lead storage battery, a structure in which 5 or 6 unit cells are connected in series is preferred.

An example of the battery module is described with reference to FIG. 7. A battery module 31 shown in FIG. 7 includes a plurality of rectangular-shaped secondary batteries $32_1$ to $32_5$ (e.g., FIG. 3 or FIG. 4) according to the first approach as unit cells. A positive electrode electro-conduction tab 8 of the battery $32_1$ and a negative electrode electro-conduction tab 9 of the adjacent battery $32_2$ are electrically connected to each other by a lead 33. Further, the positive electrode electro-conduction tab 8 of the battery $32_2$ and the negative electrode electro-conduction tab 9 of the adjacent battery $32_3$ are electrically connected to each other by the lead 33. In this manner, the batteries $32_1$ to $32_5$ are connected in series.

According to the battery module of the second approach, since the battery module includes the secondary battery according to the first approach, a battery module having excellent storage performance and cycle performance can be provided.

(Third approach)

According to the third approach, a battery pack is provided. The battery pack includes the secondary battery of the first approach.

The battery pack according to the third approach may include one or a plurality of the secondary battery (unit cells) according to the first approach as described above. The secondary batteries according to the third approach included in the battery pack may be electrically connected in series, in parallel, or in a combination of in series and in parallel. A plurality of the secondary batteries may be electrically connected to each other to constitute a battery module. When the battery module is constituted from the secondary batteries, the battery module of the second approach may be used.

The battery pack according to the third approach may further include a protective circuit. The protective circuit controls charge/discharge of the secondary battery. Alternatively, a circuit included in a device using as the battery pack

as a power source (e.g., an electronic device or an automobile) may be used as the protective circuit of the battery pack.

Further, the battery pack according to the third approach may further include an external power distribution terminal. The external power distribution terminal outputs a current from the secondary battery to outside and/or inputs a current to the unit cell 51. In other words, when the battery pack is used as a power source, the current is supplied to the outside through the external power distribution terminal. When charging the battery pack, charging current (including a regenerative energy caused by, for example, power of automobile) is supplied to the battery pack through the external power distribution terminal 59.

An example of the battery pack according to the third approach is described with reference to FIG. 8. FIG. 8 is a schematic perspective view showing an example of the battery pack.

A battery pack 40 includes a battery module formed of secondary batteries shown in FIGS. 3 and 4. The battery pack 40 includes a cabinet 41 and a battery module 42 received in the cabinet 41. The battery module 42 is formed by electrically connecting a plural (e.g., five) of secondary batteries $43_1$ to $43_5$. The secondary batteries $43_1$ to $43_5$ are stacked in the thickness direction. The top and four side surfaces of the cabinet 41 have openings 44. The protruded side surfaces of the positive and negative electrode terminals 12 and 13 of the secondary batteries $43_1$ to $43_5$ are exposed to the openings 44 of the cabinet 41. An output positive electrode terminal 45 of the battery module 42 has a band-shape. One end of the output positive electrode terminal 45 is electrically connected to at least one positive electrode terminal 13 of the secondary batteries $43_1$ to $43_5$, and the other end of the terminal protrudes from the opening 44 of the cabinet 41 and projects from the top of the cabinet 41. Meanwhile, an output negative electrode terminal 46 of the battery module 42 has a band-shape. One end of the output negative electrode terminal 46 is electrically connected to at least one negative electrode terminal 12 of the secondary batteries $43_1$ to $43_5$, and the other end of the terminal protrudes from the opening 44 of the cabinet 41 and projects from the top of the cabinet 41.

Another example of the battery pack according to the third approach is described in detail with reference to FIG. 9 and FIG. 10. FIG. 9 is an exploded perspective view showing another example of the battery pack according to the third approach. FIG. 10 is a block diagram showing an electric circuit of the battery pack in FIG. 9.

A plurality of an unit cell 51 constituted of flat-shaped secondary batteries is stacked in such a manner that a negative electrode terminal 52 and a positive electrode terminal 53 extending out are oriented in the same direction, and bound by an adhesive tape 54 to form a battery module 55. As shown in FIG. 10, the unit cells 51 are electrically connected in series with each other.

A printed wiring board 56 is disposed opposing to the side surface of the unit cells 51 from which the negative electrode terminal 52 and the positive electrode terminal 53 are extended. As shown in FIG. 10, a thermistor 57, a protective circuit 58, and an external power distribution terminal 59 are mounted on the printed wiring board 56. Incidentally, an insulating plate (not shown) is attached to the surface of the printed wiring board 56 which faces the battery module 55, thereby avoiding unnecessary connection of the wiring line of the battery module 55 with the printed wiring board 56.

A positive electrode lead 60 is connected to the positive electrode terminal 53 which is located at the undermost layer of the battery module 55, and its tip is inserted to and electrically connected to a positive electrode connector 61 of the printed wiring board 56. A negative electrode lead 62 is connected to the negative electrode terminal 52 which is located at the uppermost layer of the battery module 55, and its tip is inserted to and electrically connected to a negative electrode connector 63 of the printed wiring board 56. These connectors 61 and 63 are connected to the protective circuit 58 via wiring lines 64 and 65 that are formed on the printed wiring board 56.

The thermistor 57 detects the temperature of each of the unit cells 51 and sends the detection signal to the protective circuit 58. The protective circuit 58 can shut down a plus wiring line 66a and a minus wiring line 66b between the protective circuit 58 and the external power distribution terminal 59 under a predetermined condition. The predetermined condition refers to, for example, the time at which the temperature detected by the thermistor 57 reaches a predetermined temperature or more. Further, the predetermined condition, refers to the time at which over-charge, over-discharge, and over-current of the unit cells 51 are detected. The over-charge detection is performed on each of the unit cells 51 or the battery module 55. In the case where each of the unit cells 51 is detected, the battery voltage may be detected or the positive electrode potential or the negative electrode potential may be detected. In the case of the latter, a lithium electrode to be used as a reference electrode is inserted into each of the unit cells 51. In the case of FIGS. 9 and 10, wiring lines 67 for voltage detection are connected to the unit cells 51 and detection signals are sent to the protective circuit 58 through the wiring lines 67.

Protective sheets 68 made of rubber or resin are formed on three side surfaces of the battery module 55 except for the side face from which the positive electrode terminal 53 and the negative electrode terminal 52 protrude.

The battery module 55 is housed in a housing container 69 together with the protective sheets 68 and the printed wiring board 56. That is, the protective sheets 68 are arranged on both internal surfaces along a long side direction and one internal surface along a short side direction of the housing container 69, and the printed wiring board 56 is disposed on the opposite internal surface along the short side direction. The battery module 55 is located in a space surrounded by the protective sheets 68 and the printed wiring board 56. A lid 70 is attached to the top of the receiving

container 69.

In order to fix the battery module 55, a heat-shrinkable tape may be used in place of the adhesive tape 54. In this case, the battery module is fastened by placing the protective sheets on both side surfaces of the battery module, placing a heat-shrinkable tape around the battery module, and thermally shrinking the heat-shrinkable tape.

In FIGS. 9 and 10, an aspect in which the unit cells 51 are connected in series is shown. However, in order to increase the battery capacity, the unit cells may be connected in parallel. Alternatively, the series connection and the parallel connection may be combined. Furthermore, assembled battery packs may be connected to each other in series and/or in parallel.

The aspect of the battery pack may be appropriately changed depending on the application thereof. The battery pack can be suitably used in applications in which large current charging and discharging is demanded. Specifically, the battery pack may be used, for example, as a power source of a digital camera, an on-board battery for a vehicle such as a two- to four-wheeled hybrid electric automobile, a two- to four-wheeled electric automobile, a power-assisted bicycle, and a railway vehicle, and a stationary battery. In particular, the battery pack is suitably used as an on-board battery for a vehicle.

In a vehicle such as an automobile to which the battery pack according to the approach is mounted, the battery pack is configured to recover a regenerative energy caused by power of the vehicle.

According to the battery pack of the third approach, since the battery pack includes the battery of the first approach, a battery pack having excellent storage performance and cycle performance can be provided.

(Fourth approach)

According to the fourth approach, a vehicle is provided. The vehicle is equipped with the battery pack according to the third approach.

In the vehicle according to the fourth approach, the battery pack is configured to, for example, recover kinetic energy of the vehicle as regenerative energy.

Examples of the vehicle according to the fourth approach include a two- to four-wheeled hybrid electric automobile, a two- to four-wheeled electric automobile, a power-assisted bicycle, and a railway vehicle.

In the vehicle according to the fourth approach, the installing position of the battery pack is not particularly limited. For example, when installing the battery pack on an automobile, the battery pack may be installed in the engine compartment of the vehicle, in rear sections of the vehicle, or under a seat.

Next, an example of the vehicle according to the fourth approach is described with reference to the drawings.

FIG. 11 is a cross-sectional view schematically showing an example of the vehicle according to the fourth approach.

A vehicle 200 shown in FIG. 11 includes a vehicle body 201 and a battery pack 202. The battery pack 202 may be a battery pack according to the third approach.

The vehicle 200 shown in FIG. 11 is a four-wheeled automobile. As the vehicle 200, for example, a two- to four-wheeled hybrid electric automobile, a two- to four-wheeled electric automobile, a power-assisted bicycle, and a railway vehicle may be used.

This vehicle 200 may be equipped with a plurality of battery packs 202. In this case, the battery packs 202 may be connected to each other in series, or may be connected in parallel. The battery packs 202 may be connected in combination of series connection and parallel connection.

The battery pack 202 is installed in an engine compartment located at the front of the vehicle body 201. The position at which the battery pack 202 is installed is not particularly limited. The battery pack 202 may be installed in rear sections of the vehicle body 201, or under a seat. The battery pack 202 may be used as a power source of the vehicle 200. The battery pack 202 can recover the kinetic energy of the vehicle 200 as regenerative energy.

Next, an aspect of the vehicle according to the fourth approach is described with reference to FIG. 12.

FIG. 12 is a view schematically showing another example of the vehicle according to the fourth approach. The vehicle 300 shown in FIG. 12 is an electric automobile.

The vehicle 300 shown in FIG. 12 includes a vehicle body 301, a vehicle power supply 302, a vehicle ECU (Electric Control Unit) 380 serving as the host control means of the vehicle power supply 302, an external terminal (a terminal used to connect an external power supply) 370, an inverter 340, and a drive motor 345.

In the vehicle 300, the vehicle power supply 302 is mounted, for example, in an engine room, on the rear side of the vehicle body of the automobile, or under a seat. FIG. 12 schematically shows the position of the vehicle power supply 302 installed in the vehicle body 300.

The vehicle power supply 302 includes plurality of (for example, three) battery packs 312a, 312b, and 312c, a BMU (Battery Management Unit) 311, and a communication bus 310.

The three battery packs 312a, 312b, and 312c are electrically connected in series. The battery pack 312a includes a battery module 314a and a battery module monitoring unit (For example, VTM: Voltage Temperature Monitoring) 313a. The battery pack 312b includes a battery module 314b and a battery module monitoring unit 313b. The battery pack 312c includes a battery module 314c and a battery module monitoring unit 313c. The battery packs 312a, 312b, and 312c can independently be detached and exchanged with another battery pack 312.

Each of the battery modules 314a to 314c includes a plurality of unit cells connected to each other in series. At least one of the unit cells is a secondary battery according to the first approach. Each of the battery modules 314a to 314c performs charge and discharge via a positive electrode terminal 316 and a negative electrode terminal 317.

In order to collect information concerning maintenance of the vehicle power supply 302, the battery management unit 311 performs communication with the battery module monitoring units 313a to 313c and collects information such as voltages and temperatures of the unit cells included in the battery modules 314a to 314c contained in the vehicle power supply 302.

The communication bus 310 is connected between the BMU 311 and the battery module monitoring units 313a to 313c. The communication bus 310 is configured to cause plural of nodes (the BMU and at least one battery module monitoring unit) to share a set of communication lines. The communication bus 310 is a communication bus configured based on, for example, the CAN (Control Area Network) standard.

The battery module monitoring units 313a to 313c measure the voltage and temperature of the individual unit cells of the battery modules 314a to 314c based on a command from the BMU 311 by communication. The temperature can be measured at several points per battery module, and it is unnecessary to measure the temperatures of all unit cells.

The vehicle power supply 302 can also include an electromagnetic contactor (for example, a switch device 333 shown in FIG. 12) configured to connect/disconnect the positive electrode terminal 316 and the negative electrode terminal 317. The switch device 333 includes a precharge switch (not shown) to be turned on when charging the battery modules 314a to 314c, and a main switch (not shown) to be turned on when supplying a battery output to a load. Each of the precharge switch and the main switch includes a relay circuit (not shown) that is turned on/off by a signal supplied to a coil arranged near the switch element.

The inverter 340 converts an input direct current voltage to a three-phase high-voltage alternate current (AC) for driving a motor. The three-phase output terminal of the inverter 340 is connected to each three-phase input terminal of the drive motor 345. The inverter 340 controls the output voltage based on control signals from the battery management unit 311 or the vehicle ECU 380 that is configured to control the entire operation of the vehicle.

The drive motor 345 is rotated by electric power supplied from the inverter 340. The rotation is transmitted to an axle and driving wheels W via a differential gear unit.

The vehicle body 300 is equipped with, although not illustrated, a regenerative braking mechanism. The regenerative braking mechanism rotates the drive motor 345 during braking of the vehicle body 300, and converts the kinetic energy to regenerative energy as electric energy. The regenerative energy recovered by the regeneration brake mechanism is input to the inverter 340 and converted into a DC current. The DC current is input to the vehicle power supply 302.

To the negative electrode terminal 317 of the vehicle power supply 302, one of the terminals of a connecting line L1 is connected via a current detector (not shown) in the battery management unit 311. The other terminal of the connecting line L1 is connected to the negative electrode input terminal of the inverter 340.

One terminal of a connection line L2 is connected to the positive electrode terminal 316 of the vehicle power supply 302 via the switch device 333. The other terminal of the connection line L2 is connected to the positive electrode input terminal of the inverter 340.

The external terminal 370 is connected to the BMU 311. The external terminal 370 can be connected to, for example, an external power supply.

The vehicle ECU 380 cooperatively controls the battery management unit 311 together with other units in response to inputs derived from an operation of the driver or the like, and performs total management of the vehicle. Between the battery management unit 311 and the vehicle ECU 380, transfer of data concerning maintenance of the vehicle power source 302, such as a remaining capacity of the vehicle power source 302, is performed via communication lines.

The vehicle according to the fourth approach includes the battery pack according to the third approach. That is, the vehicle is equipped with a battery pack having excellent storage performance and cycle performance, and therefore the vehicle according to the fourth approach is excellent in storage performance and cycle performance. Furthermore, since the battery pack excels in longevity characteristics, a highly reliable vehicle can be provided.

(Fifth approach)

According to the fifth approach, a stationary power supply is provided. The stationary power supply is equipped with the battery pack according to the third approach. This stationary power supply may be equipped with, instead of the battery pack according to the third approach, the battery module according to the second approach or the battery according to the first approach.

The stationary power supply according to the fifth approach is equipped with the battery pack according to the third approach. Therefore, the stationary power supply according to the fifth approach can have a long lasting lifetime.

FIG. 13 is a block diagram showing an example of a system including the stationary power supply according to the fifth approach. FIG. 13 is a diagram showing an application example to stationary power supplies 112, 123 as an example of use of battery packs 40A, 40B according to the second approach. In the example shown in FIG. 13, a system 110 in which the stationary power supplies 112, 123 are used is shown. The system 110 includes an electric power plant 111, the stationary power supply 112, a customer side electric power system 113, and an energy management system (EMS) 115. Also, an electric power network 116 and a communication network 117 are formed in the system 110, and the electric power plant 111, the stationary power supply 112, the customer side electric power system 113 and the EMS 115 are connected via the electric power network 116 and the communication network 117. The EMS 115 performs control to stabilize the entire system 110 by utilizing the electric power network 116 and the communication network 117.

The electric power plant 111 generates a large amount of electric power from fuel sources such as thermal power or nuclear power. Electric power is supplied from the electric power plant 111 through the electric power network 116 and the like. In addition, the battery pack 40A is installed in the stationary power supply 112. The battery pack 40A can store electric power and the like supplied from the electric power plant 111. In addition, the stationary power supply 112 can supply the electric power stored in the battery pack 40A through the electric power network 116 and the like. The system 110 is provided with an electric power converter 118. The electric power converter 118 includes a converter, an inverter, a transformer and the like. Thus, the electric power converter 118 can perform conversion between direct current (DC) and alternate current (AC), conversion between alternate currents of frequencies different from each other, voltage transformation (step-up and step-down) and the like. Therefore, the electric power converter 118 can convert electric power from the electric power plant 111 into electric power that can be stored in the battery pack 40A.

The customer side electric power system 113 includes an electric power system for factories, an electric power system for buildings, an electric power system for home use and the like. The customer side electric power system 113 includes a customer side EMS 121, an electric power converter 122, and the stationary power supply 123. The battery pack 40B is installed in the stationary power supply 123. The customer side EMS 121 performs control to stabilize the customer side electric power system 113.

Electric power from the electric power plant 111 and electric power from the battery pack 40A are supplied to the customer side electric power system 113 through the electric power network 116. The battery pack 40B can store electric power supplied to the customer side electric power system 113. Similarly to the electric power converter 118, the electric power converter 122 includes a converter, an inverter, a transformer and the like. Thus, the electric power converter 122 can perform conversion between direct current and alternate current, conversion between alternate currents of frequencies different from each other, voltage transformation (step-up and step-down) and the like. Therefore, the electric power converter 122 can convert electric power supplied to the customer side electric power system 113 into electric power that can be stored in the battery pack 40B.

Note that the electric power stored in the battery pack 40B can be used, for example, for charging a vehicle such as an electric vehicle. Also, the system 110 may be provided with a natural energy source. In such a case, the natural energy source generates electric power by natural energy such as wind power and solar light. In addition to the electric power plant 111, electric power is also supplied from the natural energy source through the electric power network 116.

Examples are described below, but the approaches are not limited to the examples provided below.

(Example 1)

A battery was produced by the following procedure.

<Production of positive electrode>

A positive electrode was produced as follows.

$LiMn_2O_4$ (5 g)as a positive electrode active material, acetylene black (0.25 g) as a conductive agent, and a PVDF dispersion (solid matter content of 8%, NMP solution, 6.25 g) as a binder (a binder resin) were mixed using a kneader for 3 minutes to prepare a viscous slurry. The slurry was applied onto one surface of a Ti foil. Then, the solvent was distilled off at 120°C to obtain a laminated body. Next, the laminated body was rolled using a roll press. Thereafter, the laminated body was dried, and a circular piece having a diameter of 10 mm was punched out from the laminated body. The resulting positive electrode had a weight per unit area of 116 g/m$^2$.

<Production of negative electrode>

$Li4Ti_5O_{12}$ (10 g) as a negative electrode active material, graphite (1 g) as a conductive agent, a PTFE dispersion

(solid matter of 40 wt%, 1 g) as a binder (a binder resin), and 8 g of NMP (N-methyl-2-pyrrolidone) were mixed using a kneader for 3 minutes to prepare a slurry. The slurry was applied onto one surface of a Zn foil. Then, the solvent was distilled off at 120°C to obtain a laminated body. Next, the laminated body was rolled using a roll press. Thereafter, the laminated body was dried, and a circular piece having a diameter of 10 mm was punched out from the laminated body. The resulting negative electrode had a weight per unit area of 35 g/$m^2$.

<Preparation of aqueous electrolyte>

A positive electrode side aqueous electrolyte (first aqueous electrolyte), a negative electrode side aqueous electrolyte (second aqueous electrolyte), and an aqueous electrolyte for impregnation into a separator (third aqueous electrolyte) were prepared by using the salt concentrations of the first, second, and third aqueous electrolytes, and buffer agents shown in Table 1.

<Preparation of separator>

A slurry for forming a solid electrolyte membrane was prepared by dispersing LATP ($Li_{1.3}Al_{0.3}Ti_{1.7}(PO_4)_3$) as inorganic solid particles and polyvinyl butyral (PVB) as a polymer in NMP as a solvent. The mixture ratio (mass ratio) between LATP and PVB was 9:1. The prepared slurry was applied to both surfaces of nonwoven fabric (thickness of 15 μm) as a porous self-supported film, and dried. Thus, a laminated body was obtained. The laminated body was subjected to thermal press at 130°C. As a result, a separator was prepared.

<Preparation of test battery>

An aluminum plate was fixed on a plastic plate, and a negative electrode was fixed thereon. A Ti plate was fixed on another plastic plate, and a positive electrode was fixed thereon. The above-prepared negative electrode side aqueous electrolyte was dropped onto the negative electrode, a separator that had been impregnated with the third aqueous electrolyte was placed thereon, and they were brought into intimate contact with each other. Onto the other side of the separator, the positive electrode side aqueous electrolyte was dropped, the positive electrode was placed thereon, and further they were fixed with screws.

The following measurement was performed on the resulting battery.

<Measurement of osmotic pressure>

Osmotic pressure of a battery that had completed a constant-current charge and discharge test was measured. The solvent volume of the aqueous electrolyte was denoted by V ($m^3$), the amount of substance of the solute in the aqueous electrolyte (total number of moles) was denoted by n (mol), the gas constant was denoted by R ($m^2 \cdot kg/(s^2 \cdot K \cdot mol)$), and the absolute temperature of the aqueous electrolyte was denoted by T (K), and the osmotic pressure (N/$m^2$) was calculated. The results are shown in Table 8.

<Measurement of air permeability coefficient>

The battery was disassembled and the separator was separated from other components of the battery. Both of the surfaces of the separator were washed with pure water, then the separator was immersed in pure water and left to stand for 48 hours or more. Thereafter, the both surfaces were further washed with pure water, dried in a vacuum drying oven at 100°C for 48 hours or more, and then the air permeability coefficient was measured. At four points of the recovered separator, the thicknesses (m) of the separator were measured. At each of the four measurement points, the separator was sandwiched between a pair of stainless steel plates each having a hole with a diameter of 10 mm, and air was supplied from the hole of the one stainless steel plate at pressures p. The pressures p used were 1000 Pa, 2500 Pa, 4000 Pa, and 6000 Pa. Then, gas quantity Q of the air escaped from the hole of the other stainless steel plate was measured. The area (25n $mm^2$) of the hole was uses as a measurement area A, and 0.000018 Pa·s was used as a viscosity coefficient o. The gas quantity Q was calculated by measuring the amount $\delta$ ($m^3$) that had escaped from the hole within 100 seconds, and dividing the obtained amount $\delta$ by 100.

At the four measurement points, plots of the gas quantity Q versus the pressure p were made, and slope of the line obtained by linear fitting (the least-squares method) of the plots of the gas quantity Q versus the pressure p (dQ/dp) was calculated. Next, the slope (dQ/dp) obtained above was multiplied by ($\sigma \cdot L$)/A to calculate the air permeability coefficient KT. Then, the lowest air permeability coefficient value among the values at the four points was designated as an air permeability coefficient of the separator and shown in Table 8.

<Constant-current charge and discharge test>

With respect to each of Examples and Comparative Examples, a test battery was prepared, and immediately afterward the test was started without standby time. Both charging and discharging of the battery were performed at a 0.5 C rate. For charging the battery, the termination condition was the earliest time of the following: the current value became 0.25 C, the time required for charging the battery became 130 minutes, and the charge capacity became 170 mAh/g. For discharging the battery, the termination condition was after 130 minutes.

Performing the above-described charging once and performing the above-described discharging once was designated as 1 charge-discharge cycle. The discharge capacity at the 50th cycle was considered as 100%. The cycles were repeated. When the discharge capacity reached 80% of that at the 50th cycle, the number of cycles was considered as the cycle performance. The coulombic efficiency was calculated from the charge capacity and discharge capacity at the 50th cycle by the following formula.

$$\text{Coulombic efficiency (\%)} = 100 \times (\text{discharge capacity}/\text{charge capacity})$$

In each of Examples 2 to 87, a battery was prepared as in Example 1 except that the types, concentrations, and pH of the salts of the positive electrode side aqueous electrolyte, the negative electrode side aqueous electrolyte, and the third aqueous electrolyte, and the types and pKa of the buffer agent included in the third aqueous electrolyte were changed as shown in Table 3 to Table 7. Then, evaluations of the osmotic pressure, the air permeability coefficient, the cycle performance, and the coulombic efficiency were performed. The results of the evaluations are shown in Table 8. The evaluation results are shown in Tables 8 to 12. In Tables 8 to 12, osmotic pressures ($N/m^2$) of positive electrode side aqueous electrolytes, negative electrode side aqueous electrolytes, and the third aqueous electrolytes; air permeability coefficients ($m^2$) of the separators; coulombic efficiency (%); and cycle performance (number of times) are shown. The symbol "-" in the table shows that no material was added.

The separator used in Example 53 was prepared as in Example 1 except that the mixture ratio LATP and PVB (mass ratio) was 8:2.

The separator used in Example 54 was prepared as in Example 1 except that the mixture ratio LATP and PVB (mass ratio) was 9.25:0.75.

The separator used in Example 55 was prepared as in Example 1 except that the mixture ratio LATP and PVB (mass ratio) was 9.5:0.5.

Each of the separators used in Examples 84 and 85 was prepared as in Example 1 except that the mixture ratio LATP and PVB (mass ratio) was 8.5:1.5.

Each of the separators used in Examples 86 and 87 was prepared as in Example 1 except that the mixture ratio LATP and PVB (mass ratio) was 9.25:0.75.

Each of the separators used in Examples 2-52 and 56-83 and Comparative Examples 1 and 2 was the same as that prepared in Example 1.

[Table 3]

| Table 3 | Positive electrode electrolyte | | | Negative electrode electrolyte | | | Aqueous electrolyte for impregnation into separator (third aqueous electrolyte) | | | | |
|---|---|---|---|---|---|---|---|---|---|---|---|
| | Type of salt | Salt concentration | pH | Type of salt | Salt concentration | pH | Type of salt | Salt concentration | pH | pH buffer | pKa1 or pKa2, pKa3 of buffer |
| Example 1 | LiCl | 7mol/L | 7 | LiCl | 9mol/L | 7 | LiCl | 8mol/L | 7 | - | - |
| Example 2 | LiCl | 7mol/L | 7 | LiCl | 9mol/L | 7 | LiCl | 8mol/L | 7 | - | - |
| Example 3 | LiCl | 9mol/L | 7 | LiCl | 9mol/L | 9 | LiCl | 9mol/L | 8 | - | - |
| Example 4 | LiCl | 12mol/L | 7 | LiCl | 12mol/L | 9 | LiCl | 12mol/L | 8 | - | - |
| Example 5 | LiCl | 6mol/L | 7 | LiCl | 9mol/L | 9 | LiCl | 9mol/L | 8 | - | - |
| Example 6 | LiCl | 9mol/L | 7 | LiCl | 6mol/L | 9 | LiCl | 9mol/L | 8 | - | - |
| Example 7 | LiCl | 9mol/L | 7 | LiCl | 9mol/L | 9 | LiCl | 9mol/L | 8 | - | - |
| Example 8 | $LiNO_3$ | 6mol/L | 7 | $LiNO_3$ | 6mol/L | 9 | $LiNO_3$ | 6mol/L | 8 | - | - |
| Example 9 | $Li_2SO_4$ | 2mol/L | 7 | $Li_2SO_4$ | 2mol/L | 9 | $Li_2SO_4$ | 2mol/L | 8 | - | - |
| Example 10 | $LiClO_4$ | 6mol/L | 7 | $LiClO_4$ | 6mol/L | 9 | $LiClO_4$ | 6mol/L | 8 | - | - |
| Example 11 | LiTFSI | 6mol/L | 7 | LiTFSI | 6mol/L | 9 | LiTFSI | 6mol/L | 8 | - | - |
| Example 12 | LiOH | 4mol/L | 7 | LiOH | 4mol/L | 9 | LiOH | 4mol/L | 8 | - | - |
| Example 13 | $Li_2SO_4$ | 2mol/L | 7 | LiCl | 9mol/L | 9 | LiCl | 9mol/L | 8 | - | - |
| Example 14 | $Li_2SO_4$ | 2mol/L | 7 | LiTFSI | 6mol/L | 9 | LiCl | 9mol/L | 8 | - | - |
| Example 15 | LiCl | 9mol/L | 7 | $Li_2SO_4$ | 2mol/L | 9 | LiCl | 9mol/L | 8 | - | - |
| Example 16 | LiCl | 9mol/L | 1 | LiCl | 9mol/L | 14 | LiCl | 9mol/L | 7 | - | - |
| Example 17 | LiCl | 9mol/L | 3 | LiCl | 9mol/L | 9 | LiCl | 9mol/L | 7 | - | - |
| Example 18 | LiCl | 9mol/L | 3 | LiCl | 9mol/L | 14 | LiCl | 9mol/L | 6 | - | - |
| Example 19 | LiCl | 9mol/L | 1 | LiCl | 9mol/L | 14 | LiCl | 9mol/L | 8 | - | - |
| Example 20 | LiCl | 9mol/L | 7 | LiCl | 9mol/L | 9 | LiCl | 9mol/L | 8 | - | - |

[Table 4]

| Table 4 | Positive electrode electrolyte | | | Negative electrode electrolyte | | | Aqueous electrolyte for impregnation into separator (third aqueous electrolyte) | | | | |
|---|---|---|---|---|---|---|---|---|---|---|---|
| | Type of salt | Salt concentration | pH | Type of salt | Salt concentration | pH | Type of salt | Salt concentration | pH | pH buffer | pKa1 or pKa2, pKa3 of buffer |
| Example 21 | LiCl | 9mol/L | 7 | LiCl | 9mol/L | 9 | LiCl | 9mol/L | 8 | - | - |
| Example 22 | LiCl | 9mol/L | 7 | LiCl | 9mol/L | 9 | LiCl | 9mol/L | 8 | - | - |
| Example 23 | LiCl | 9mol/L | 7 | LiCl | 9mol/L | 9 | LiCl | 9mol/L | 8 | - | - |
| Example 24 | LiCl | 9mol/L | 7 | LiCl | 9mol/L | 9 | LiCl | 9mol/L | 8 | - | - |
| Example 25 | LiCl | 9mol/L | 7 | LiCl | 9mol/L | 9 | LiCl | 9mol/L | 8 | - | - |
| Example 26 | LiCl | 9mol/L | 7 | LiCl | 9mol/L | 9 | LiCl | 9mol/L | 8 | - | - |
| Example 27 | $Li_2SO_4$ | 2mol/L | 7 | $Li_2SO_4$ | 2mol/L | 9 | $Li_2SO_4$ | 2mol/L | 8 | - | - |
| Example 28 | $Li_2SO_4$ | 2mol/L | 7 | $Li_2SO_4$ | 2mol/L | 9 | $Li_2SO_4$ | 2mol/L | 8 | - | - |
| Example 29 | $Li_2SO_4$ | 2mol/L | 7 | $Li_2SO_4$ | 2mol/L | 9 | $Li_2SO_4$ | 2mol/L | 8 | - | - |
| Example 30 | $Li_2SO_4$ | 2mol/L | 7 | LiCl | 9mol/L | 9 | LiCl | 9mol/L | 8 | - | - |
| Example 31 | $Li_2SO_4$ | 2mol/L | 7 | LiCl | 9mol/L | 9 | LiCl | 9mol/L | 8 | - | - |
| Example 32 | $Li_2SO_4$ | 2mol/L | 7 | LiCl | 9mol/L | 9 | LiCl | 9mol/L | 8 | - | - |
| Example 33 | $Li_2SO_4$ | 9mol/L | 7 | LiTFSI | 6mol/L | 9 | LiCl | 9mol/L | 8 | - | - |
| Example 34 | $Li_2SO_4$ | 9mol/L | 7 | LiTFSI | 6mol/L | 9 | LiCl | 9mol/L | 8 | - | - |
| Example 35 | $Li_2SO_4$ | 9mol/L | 7 | LiTFSI | 6mol/L | 9 | LiCl | 9mol/L | 8 | - | - |
| Example 36 | LiCl | 9mol/L | 7 | LiCl | 9mol/L | 9 | LiCl | 9mol/L | 8 | Succinic acid | 7.2 |
| Example 37 | LiCl | 9mol/L | 7 | LiCl | 9mol/L | 9 | LiCl | 9mol/L | 8 | Carbonic acid | 7.62 |
| Example 38 | LiCl | 9mol/L | 7 | LiCl | 9mol/L | 9 | LiCl | 9mol/L | 8 | Citric acid | 9.23 |
| Example 39 | LiCl | 9mol/L | 7 | LiCl | 9mol/L | 9 | LiCl | 9mol/L | 8 | Phosphoric acid | 7.2 |
| Example 40 | LiCl | 9mol/L | 7 | LiCl | 9mol/L | 9 | LiCl | 9mol/L | 8 | HEPES | 7.62 |

[Table 5]

| Table 5 | Positive electrode electrolyte | | | Negative electrode electrolyte | | | Aqueous electrolyte for impregnation into separator (third aqueous electrolyte) | | | | |
|---|---|---|---|---|---|---|---|---|---|---|---|
| | Type of salt | Salt concentration | pH | Type of salt | Salt concentration | pH | Type of salt | Salt concentration | pH | pH buffer | pKa1 or pKa2, pKa3 of buffer |
| Example 41 | LiCl | 9mol/L | 7 | LiCl | 9mol/L | 9 | LiCl | 9mol/L | 8 | Boric acid | 9.23 |
| Example 42 | LiCl | 9mol/L | 7 | LiCl | 9mol/L | 9 | LiCl | 9mol/L | 8 | Glycine | 9.78 |
| Example 43 | LiCl | 9mol/L | 2 | LiCl | 9mol/L | 9 | LiCl | 9mol/L | 3 | Glycine | 2.35 |
| Example 44 | LiCl | 9mol/L | 2 | LiCl | 9mol/L | 9 | LiCl | 9mol/L | 3 | Phosphoric acid | 2.15 |
| Example 45 | LiCl | 9mol/L | 2 | LiCl | 9mol/L | 9 | LiCl | 9mol/L | 3 | Phthalic acid | 2.95 |
| Example 46 | LiCl | 9mol/L | 2 | LiCl | 9mol/L | 9 | LiCl | 9mol/L | 3 | Citric acid | 3.13 |
| Example 47 | LiCl | 9mol/L | 2 | LiCl | 9mol/L | 9 | LiCl | 9mol/L | 3 | Barbituric acid | 4.04 |
| Example 48 | LiCl | 9mol/L | 2 | LiCl | 9mol/L | 9 | LiCl | 9mol/L | 3 | Succinic acid | 5.64 |
| Example 49 | LiCl | 9mol/L | 2 | LiCl | 9mol/L | 9 | LiCl | 9mol/L | 3 | Citric acid | 4.75 |
| Example 50 | LiCl | 9mol/L | 2 | LiCl | 9mol/L | 9 | LiCl | 9mol/L | 3 | Acetic acid | 4.76 |
| Example 51 | LiCl | 9mol/L | 3 | LiCl | 9mol/L | 12 | LiCl | 9mol/L | 10 | Carbonic acid | 10.33 |
| Example 52 | LiCl | 9mol/L | 3 | LiCl | 9mol/L | 12 | LiCl | 9mol/L | 10 | Phosphoric acid | 12.33 |
| Example 53 | LiCl | 9mol/L | 7 | LiCl | 9mol/L | 9 | LiCl | 9mol/L | 8 | - | - |
| Example 54 | LiCl | 9mol/L | 7 | LiCl | 9mol/L | 9 | LiCl | 9mol/L | 8 | | - |
| Example 55 | LiCl | 9mol/L | 7 | LiCl | 9mol/L | 9 | LiCl | 9mol/L | 8 | - | - |
| Example 56 | LiCl | 9mol/L | 7 | LiCl | 9mol/L | 9 | LiCl | 9mol/L | 8 | - | - |
| Example 57 | LiCl | 9mol/L | 7 | LiCl | 9mol/L | 9 | LiCl | 9mol/L | 8 | - | - |
| Example 58 | LiTFSI | 5mol/L | 7 | LiTFSI | 5mol/L | 9 | LiTFSI | 5mol/L | 8 | - | - |
| Example 59 | LiTFSI | 5mol/L | 7 | LiTFSI | 5mol/L | 9 | LiTFSI | 5mol/L | 8 | - | - |
| Example 60 | LiCl | 9mol/L | 7 | LiCl | 11mol/L | 9 | LiCl | 9mol/L | 8 | - | - |

[Table 6]

| Table 6 | Positive electrode electrolyte | | | Negative electrode electrolyte | | | Aqueous electrolyte for impregnation into separator (third aqueous electrolyte) | | | | |
|---|---|---|---|---|---|---|---|---|---|---|---|
| | Type of salt | Salt concentration | pH | Type of salt | Salt concentration | pH | Type of salt | Salt concentration | pH | pH buffer | pKa1 or pKa2, pKa3 of buffer |
| Example 61 | LiCl | 11mol/L | 7 | LiCl | 9mol/L | 9 | LiCl | 9mol/L | 8 | - | - |
| Example 62 | LiCl | 9mol/L | 7 | LiCl | 9mol/L | 9 | LiCl | 6mol/L | 8 | - | - |
| Example 63 | LiCl | 9mol/L | 7 | LiCl | 9mol/L | 9 | LiCl | 6mol/L | 8 | - | - |
| Example 64 | LiCl | 9mol/L | 7 | LiCl | 11mol/L | 9 | LiCl | 10mol/L | 8 | - | - |
| Example 65 | LiCl | 11mol/L | 7 | LiCl | 9mol/L | 9 | LiCl | 10mol/L | 8 | - | - |
| Example 66 | LiCl | 9mol/L | 7 | LiCl | 10mol/L | 9 | LiCl | 11mol/L | 8 | - | - |
| Example 67 | LiCl | 10mol/L | 7 | LiCl | 9mol/L | 9 | LiCl | 11mol/L | 8 | - | - |
| Example 68 | LiCl | 10mol/L | 7 | LiCl | 11mol/L | 9 | LiCl | 9mol/L | 8 | - | - |
| Example 69 | LiCl | 11mol/L | 7 | LiCl | 10mol/L | 9 | LiCl | 9mol/L | 8 | - | - |
| Example 70 | LiCl | 9mol/L | 6 | LiCl | 9mol/L | 10 | LiCl | 9mol/L | 8 | - | - |
| Example 71 | LiCl | 9mol/L | 6 | LiCl | 9mol/L | 10 | LiCl | 9mol/L | 8 | - | - |
| Example 72 | LiCl | 9mol/L | 5 | LiCl | 9mol/L | 13 | LiCl | 9mol/L | 7 | - | - |
| Example 73 | LiCl | 9mol/L | 5 | LiCl | 9mol/L | 3 | LiCl | 9mol/L | 7 | - | - |
| Example 74 | LiCl | 9mol/L | 7 | LiCl | 9mol/L | 9 | LiCl | 9mol/L | 8 | Succinic acid | 7.2 |

(continued)

| Table 6 | Positive electrode electrolyte | | | Negative electrode electrolyte | | | Aqueous electrolyte for impregnation into separator (third aqueous electrolyte) | | | | |
|---|---|---|---|---|---|---|---|---|---|---|---|
| | Type of salt | Salt concentration | pH | Type of salt | Salt concentration | pH | Type of salt | Salt concentration | pH | pH buffer | pKa1 or pKa2, pKa3 of buffer |
| Example 75 | LiCl | 9mol/L | 7 | LiCl | 9mol/L | 9 | LiCl | 9mol/L | 8 | Succinic acid | 7.2 |
| Example 76 | LiCl | 9mol/L | 7 | LiCl | 9mol/L | 9 | LiCl | 9mol/L | 8 | Citric acid | 9.23 |
| Example 77 | LiCl | 9mol/L | 7 | LiCl | 9mol/L | 9 | LiCl | 9mol/L | 8 | Citric acid | 9.23 |
| Example 78 | LiCl | 9mol/L | 7 | LiCl | 9mol/L | 9 | LiCl | 9mol/L | 8 | Phosphoric acid | 7.2 |
| Example 79 | LiCl | 9mol/L | 7 | LiCl | 9mol/L | 9 | LiCl | 9mol/L | 8 | Phosphoric acid | 7.2 |
| Example 80 | LiCl | 9mol/L | 2 | LiCl | 9mol/L | 9 | LiCl | 9mol/L | 3 | Phthalic acid | 2.95 |

[Table 7]

| Table 7 | Positive electrode electrolyte | | | Negative electrode electrolyte | | | Aqueous electrolyte for impregnation into separator (third aqueous electrolyte) | | | | |
|---|---|---|---|---|---|---|---|---|---|---|---|
| | Type of salt | Salt concentration | pH | Type of salt | Salt concentration | pH | Type of salt | Salt concentration | pH | pH buffer | pKa1 or pKa2, pKa3 of buffer |
| Example 81 | LiCl | 9mol/L | 2 | LiCl | 9mol/L | 9 | LiCl | 9mol/L | 3 | Phthalic acid | 2.95 |
| Example 82 | LiCl | 9mol/L | 3 | LiCl | 9mol/L | 12 | LiCl | 9mol/L | 10 | Phosphoric acid | 12.33 |
| Example 83 | LiCl | 9mol/L | 3 | LiCl | 9mol/L | 12 | LiCl | 9mol/L | 10 | Phosphoric acid | 12.33 |
| Example 84 | LiCl | 9mol/L | 7 | LiCl | 9mol/L | 9 | LiCl | 9mol/L | 8 | Succinic acid | 7.2 |
| Example 85 | LiCl | 9mol/L | 7 | LiCl | 9mol/L | 9 | LiCl | 9mol/L | 8 | Succinic acid | 7.2 |
| Example 86 | LiCl | 9mol/L | 7 | LiCl | 9mol/L | 9 | LiCl | 9mol/L | 8 | Succinic acid | 7.2 |
| Example 87 | LiCl | 9mol/L | 7 | LiCl | 9mol/L | 9 | LiCl | 9mol/L | 8 | Succinic acid | 7.2 |
| Comparative Example 1 | LiCl | 9mol/L | 7 | LiCl | 9mol/L | 7 | LiCl | 9mol/L | 7 | - | - |
| Comparative Example 2 | $Li_2SO_4$ | 2mol/L | 4 | $Li_2SO_4$ | 2mol/L | 4 | $Li_2SO_4$ | 2mol/L | 4 | - | - |

[Table 8]

| Table 8 | Osmotic pressure | | | Separator | Coulombic efficiency (%) | Cycle performance (times) |
|---|---|---|---|---|---|---|
| | Positive electrode aqueous electrolyte ($N/m^2$) | Negative electrode aqueous electrolyte ($N/m^2$) | Aqueous electrolyte for impregnation into separator (third aqueous electrolyte) ($N/m^2$) | Air permeability coefficient ($m^2$) | | |
| Example 1 | 18 | 18 | 18 | $1.0\times10^{-17}$ | 90 | 500 |
| Example 2 | 17 | 18 | 19 | $1.0\times10^{-17}$ | 90 | 500 |
| Example 3 | 18 | 18 | 18 | $1.0\times10^{17}$ | 90 | 500 |
| Example 4 | 24 | 24 | 24 | $1.0\times10^{-17}$ | 92 | 800 |
| Example 5 | 12 | 18 | 18 | $1.0\times10^{-17}$ | 90 | 500 |
| Example 6 | 18 | 12 | 18 | $1.0\times10^{-17}$ | 85 | 350 |
| Example 7 | 18 | 18 | 18 | $1.0\times10^{-17}$ | 90 | 500 |
| Example 8 | 12 | 12 | 12 | $1.0\times10^{-17}$ | 85 | 350 |
| Example 9 | 6 | 6 | 6 | $1.0\times10^{-17}$ | 90 | 500 |
| Example 10 | 6 | 12 | 12 | $1.0\times10^{-17}$ | 85 | 350 |
| Example 11 | 12 | 12 | 12 | $1.0\times10^{-17}$ | 90 | 500 |
| Example 12 | 8 | 8 | 8 | $1.0\times10^{-17}$ | 90 | 500 |
| Example 13 | 6 | 18 | 18 | $1.0\times10^{-17}$ | 90 | 500 |
| Example 14 | 6 | 12 | 18 | $1.0\times10^{-17}$ | 90 | 500 |
| Example 15 | 18 | 6 | 18 | $1.0\times10^{-17}$ | 90 | 500 |
| Example 16 | 18 | 18 | 18 | $1.0\times10^{-17}$ | 90 | 500 |
| Example 17 | 18 | 18 | 18 | $1.0\times10^{-17}$ | 90 | 500 |
| Example 18 | 18 | 18 | 18 | $1.0\times10^{-17}$ | 90 | 500 |
| Example 19 | 18 | 18 | 18 | $1.0\times10^{-17}$ | 89 | 450 |
| Example 20 | 24 | 24 | 24 | $1.0\times10^{-17}$ | 90 | 500 |

[Table 9]

| Table 9 | Osmotic pressure | | | Separator | Coulombic efficiency (%) | Cycle performance (times) |
|---|---|---|---|---|---|---|
| | Positive electrode aqueous electrolyte ($N/m^2$) | Negative electrode aqueous electrolyte ($N/m^2$) | Aqueous electrolyte for impregnation into separator (third aqueous electrolyte) ($N/m^2$) | Air permeability coefficient ($m^2$) | | |
| Example 21 | 24 | 28 | 26 | $1.0\times10^{-17}$ | 92 | 800 |
| Example 22 | 24 | 26 | 28 | $1.0\times10^{-17}$ | 90 | 500 |
| Example 23 | 28 | 24 | 26 | $1.0\times10^{-17}$ | 92 | 800 |
| Example 24 | 26 | 24 | 28 | $1.0\times10^{-17}$ | 91 | 600 |
| Example 25 | 28 | 26 | 24 | $1.0\times10^{-17}$ | 89 | 450 |
| Example 26 | 26 | 28 | 24 | $1.0\times10^{-17}$ | 89 | 450 |
| Example 27 | 6 | 6 | 6 | $1.0\times10^{-17}$ | 90 | 500 |
| Example 28 | 6 | 10 | 8 | $1.0\times10^{-17}$ | 92 | 800 |
| Example 29 | 10 | 6 | 8 | $1.0\times10^{-17}$ | 91 | 600 |
| Example 30 | 24 | 24 | 24 | $1.0\times10^{-17}$ | 90 | 500 |
| Example 31 | 24 | 28 | 26 | $1.0\times10^{-17}$ | 92 | 800 |
| Example 32 | 28 | 24 | 26 | $1.0\times10^{-17}$ | 91 | 600 |
| Example 33 | 24 | 24 | 24 | $1.0\times10^{-17}$ | 90 | 500 |
| Example 34 | 24 | 28 | 26 | $1.0\times10^{-17}$ | 91 | 600 |
| Example 35 | 28 | 24 | 26 | $1.0\times10^{-17}$ | 89 | 450 |
| Example 36 | 24 | 24 | 24 | $1.0\times10^{-17}$ | 93 | 1000 |
| Example 37 | 24 | 28 | 26 | $1.0\times10^{-17}$ | 93 | 1000 |
| Example 38 | 28 | 24 | 26 | $1.0\times10^{-17}$ | 94 | 1200 |
| Example 39 | 24 | 24 | 24 | $1.0\times10^{-17}$ | 93 | 1000 |
| Example 40 | 24 | 28 | 26 | $1.0\times10^{-17}$ | 94 | 1200 |

[Table 10]

| Table 10 | Osmotic pressure | | | Separator | Coulombic efficiency (%) | Cycle performance (times) |
|---|---|---|---|---|---|---|
| | Positive electrode aqueous electrolyte ($N/m^2$) | Negative electrode aqueous electrolyte ($N/m^2$) | Aqueous electrolyte for impregnation into separator (third aqueous electrolyte) ($N/m^2$) | Air permeability coefficient ($m^2$) | | |
| Example 41 | 28 | 24 | 26 | $1.0\times10^{-17}$ | 94 | 1200 |
| Example 42 | 28 | 24 | 26 | $1.0\times10^{-17}$ | 93 | 1000 |
| Example 43 | 24 | 24 | 24 | $1.0\times10^{-17}$ | 93 | 1000 |
| Example 44 | 24 | 28 | 26 | $1.0\times10^{-17}$ | 94 | 1200 |
| Example 45 | 28 | 24 | 26 | $1.0\times10^{-17}$ | 94 | 1200 |
| Example 46 | 24 | 24 | 24 | $1.0\times10^{-17}$ | 94 | 1200 |
| Example 47 | 24 | 28 | 26 | $1.0\times10^{-17}$ | 94 | 1200 |
| Example 48 | 28 | 24 | 26 | $1.0\times10^{-17}$ | 92 | 800 |
| Example 49 | 24 | 28 | 26 | $1.0\times10^{-17}$ | 93 | 1000 |
| Example 50 | 28 | 24 | 26 | $1.0\times10^{-17}$ | 94 | 1200 |
| Example 51 | 24 | 28 | 26 | $1.0\times10^{-17}$ | 93 | 1000 |
| Example 52 | 28 | 24 | 26 | $1.0\times10^{-17}$ | 93 | 1000 |
| Example 53 | 18 | 18 | 18 | $1.0\times10^{-19}$ | 93 | 1000 |
| Example 54 | 18 | 18 | 18 | $1.0\times10^{-16}$ | 87 | 400 |
| Example 55 | 18 | 18 | 18 | $1.0\times10^{-15}$ | 86 | 300 |
| Example 56 | 18 | 22 | 20 | $1.0\times10^{-17}$ | 91 | 600 |
| Example 57 | 22 | 18 | 20 | $1.0\times10^{-17}$ | 91 | 600 |
| Example 58 | 10 | 14 | 12 | $1.0\times10^{-17}$ | 90 | 500 |
| Example 59 | 14 | 10 | 12 | $1.0\times10^{-17}$ | 90 | 500 |
| Example 60 | 18 | 22 | 20 | $1.0\times10^{-17}$ | 90 | 500 |

[Table 11]

| Table 11 | Osmotic pressure | | | Separator | Coulombic efficiency (%) | Cycle performance (times) |
|---|---|---|---|---|---|---|
| | Positive electrode aqueous electrolyte ($N/m^2$) | Negative electrode aqueous electrolyte ($N/m^2$) | Aqueous electrolyte for impregnation into separator (third aqueous electrolyte) ($N/m^2$) | Air permeability coefficient ($m^2$) | | |
| Example 61 | 22 | 18 | 20 | $1.0\times10^{-17}$ | 90 | 500 |
| Example 62 | 18 | 22 | 20 | $1.0\times10^{-17}$ | 90 | 500 |
| Example 63 | 22 | 18 | 20 | $1.0\times10^{-17}$ | 90 | 500 |
| Example 64 | 18 | 22 | 20 | $1.0\times10^{-17}$ | 90 | 500 |
| Example 65 | 22 | 18 | 20 | $1.0\times10^{-17}$ | 90 | 500 |
| Example 66 | 18 | 22 | 20 | $1.0\times10^{-17}$ | 90 | 500 |
| Example 67 | 22 | 18 | 20 | $1.0\times10^{-17}$ | 90 | 500 |
| Example 68 | 20 | 22 | 21 | $1.0\times10^{-17}$ | 90 | 500 |
| Example 69 | 22 | 20 | 21 | $1.0\times10^{-17}$ | 90 | 500 |
| Example 70 | 18 | 22 | 20 | $1.0\times10^{-17}$ | 92 | 800 |
| Example 71 | 22 | 18 | 20 | $1.0\times10^{-17}$ | 92 | 800 |
| Example 72 | 18 | 22 | 20 | $1.0\times10^{-17}$ | 93 | 1000 |
| Example 73 | 22 | 18 | 20 | $1.0\times10^{-17}$ | 90 | 500 |
| Example 74 | 18 | 22 | 20 | $1.0\times10^{-17}$ | 91 | 600 |
| Example 75 | 22 | 18 | 20 | $1.0\times10^{-17}$ | 91 | 600 |
| Example 76 | 18 | 22 | 20 | $1.0\times10^{-17}$ | 91 | 600 |
| Example 77 | 22 | 18 | 20 | $1.0\times10^{-17}$ | 91 | 600 |
| Example 78 | 18 | 22 | 20 | $1.0\times10^{-17}$ | 91 | 600 |
| Example 79 | 22 | 18 | 20 | $1.0\times10^{-17}$ | 91 | 600 |
| Example 80 | 18 | 22 | 20 | $1.0\times10^{-17}$ | 91 | 600 |

[Table 12]

| Table 12 | Osmotic pressure | | | Separator | Coulombic efficiency (%) | Cycle performance (times) |
|---|---|---|---|---|---|---|
| | Positive electrode aqueous electrolyte ($N/m^2$) | Negative electrode aqueous electrolyte ($N/m^2$) | Aqueous electrolyte for impregnation into separator (third aqueous electrolyte) ($N/m^2$) | Air permeability coefficient ($m^2$) | | |
| Example 81 | 22 | 18 | 20 | $1.0\times10^{-17}$ | 91 | 600 |
| Example 82 | 18 | 22 | 20 | $1.0\times10^{-17}$ | 92 | 800 |
| Example 83 | 22 | 18 | 20 | $1.0\times10^{-17}$ | 92 | 800 |
| Example 84 | 18 | 22 | 20 | $1.0\times10^{-18}$ | 93 | 1000 |
| Example 85 | 22 | 18 | 20 | $1.0\times10^{-18}$ | 93 | 1000 |
| Example 86 | 18 | 22 | 20 | $1.0\times10^{-17}$ | 90 | 500 |
| Example 87 | 22 | 18 | 20 | $1.0\times10^{-16}$ | 90 | 500 |
| Comparative Example 1 | - | - | - | $1.0\times10^{-17}$ | 80 | 200 |
| Comparative Example 2 | - | - | - | $1.0\times10^{-17}$ | 60 | 100 |

As compared to Examples 1 to 87, in Comparative Examples 1 and 2 in which the type of salt, the concentration of salt, the pH, and the osmotic pressure of the first aqueous electrolyte, the second aqueous electrolyte, and the third aqueous electrolyte were the same as those of Examples 1 to 87, it was found that the coulombic efficiency and the cycle performance were decreased. When all of the type of salt, the concentration of salt, the pH, and the osmotic pressure are the same, it means that the first and second aqueous electrolytes used are the same. Therefore, it is required that the aqueous electrolyte satisfies both oxidation resistance for the positive electrode and reduction resistance for the negative electrode at the same time, which is, however, difficult. Thus, in this case, the coulombic efficiency and the cycle performance are decreased by oxidation and reduction as side reactions. In particular, about pH, as known by a Pourbaix diagram, it is known that thermodynamic stability region of water with respect to oxidation and reduction is independent of pH and stable, and is 1.23 V. When pH of the first and second aqueous electrolytes are the same, the thermodynamic stability region of water cannot be 1.23 V or more, and thus the coulombic efficiency and the cycle performance decreases.

In Examples 1 and 2, the third aqueous electrolyte had a salt concentration that was different from those of the first and second aqueous electrolytes. The salt concentrations were as follows: first aqueous electrolyte < third aqueous electrolyte < second aqueous electrolyte. In Examples 3 to 12, the third aqueous electrolyte had a pH that was different from those of the first and second aqueous electrolytes. The pH was as follows: first aqueous electrolyte < third aqueous electrolyte < second aqueous electrolyte. This allowed the osmotic pressures of the first aqueous electrolyte and the third aqueous electrolyte to be close, and osmotic pressures of the second aqueous electrolyte and the third aqueous electrolyte to be close. Thus, mixing of the first aqueous electrolyte and the second aqueous electrolyte could be prevented, and coulombic efficiency and cycle performance could be achieved.

In Examples 13 to 15, the third aqueous electrolyte contained a salt that was different from those in the first and second aqueous electrolytes. This realized a combination that allowed the anion of the salt to be hardly oxidized or reduced, and thus a side reaction could be prevented. Thus, the coulombic efficiency and the cycle performance were improved as compared to Comparative Examples.

In Examples 16 to 19, pH of the first, second, and third electrolytes were different from each other. By using a low-pH aqueous electrolyte as the first aqueous electrolyte, oxygen generation due to electrolysis of water of the electrolyte could be prevented. By using a high-pH aqueous electrolyte as the second aqueous electrolyte, hydrogen generation due to electrolysis of water of the aqueous electrolyte could be prevented. The third aqueous electrolyte was used for preventing mixing of the first and second aqueous electrolytes. By adjusting the pH of the third aqueous electrolyte between those of the first electrolyte and the second electrolyte, the third aqueous electrolyte could play a role like a buffer solution. Accordingly, the coulombic efficiency and the cycle performance were improved as compared

to Comparative Examples.

With respect to Examples 21 to 29, 31, 32, 34, and 35, by varying osmotic pressures, the coulombic efficiency and the cycle performance were improved as compared to Comparative Examples. The reason was as follows. When the same salt was used, it was required to select a salt resistant to oxidation and reduction reactions at the positive electrode and the negative electrode, respectively. Further, since different reactions occurred at the positive electrode and the negative electrode, the additives used for preventing side reactions may be different types, and used in different amounts and at different concentrations. Thus, the osmotic pressures became different. To reduce the differences in osmotic pressure, the relationships of the osmotic pressures were adjusted as follows: first > third > second or first< third < second. Accordingly, even when the types of salt were different, the coulombic efficiency and the cycle performance could be improved.

As in Examples 30 and 33, even when the osmotic pressures were the same, by using a different salt in at least one of the first, second, and third, an anion species that is strongly resistant to oxidation and reduction at the positive electrode and the negative electrode could be selected. Thus, the coulombic efficiency and the cycle performance are improved as compared to Comparative Examples.

As in Examples 36 to 52, using buffer solutions, mixing of the aqueous electrolytes could be further prevented, and the coulombic efficiency and the cycle performance could be improved. This is because the buffer solutions could buffer pH fluctuation, and thus the fluctuation in pH due to mixing of the liquids could be prevented.

As in Examples 53 to 55, when the air permeability coefficient of the separator was within a range of $1.0 \times 10^{-15}$ $m^2$ or less, the aqueous electrolytes of the positive electrode and the negative electrode could be separated, and the coulombic efficiency and the cycle performance could be improved. When the air permeability coefficient was larger than $1 \times 10^{-14}$ $m^2$, the aqueous electrolytes of the positive electrode and the negative electrode were mixed with each other, and thus the performance improvement effect could not be achieved. As the air permeability coefficient is lower, mixing of the electrolytes of the positive electrode and the negative electrode can be further prevented, and the coulombic efficiency and the cycle performance are improved.

In Examples 55 to 87, at least one of the type of salt, the concentration of salt, the pH, and the osmotic pressure of the third aqueous electrolyte was different from those of the first aqueous electrolyte and the second aqueous electrolyte. Thus, the coulombic efficiency could be improved, that is, the storage performance was improved and the cycle performance was improved.

According to at least one of the approaches and examples described above, a battery is provided. The battery includes: a positive electrode; a first aqueous electrolyte held by the positive electrode; a negative electrode; a second aqueous electrolyte held by the negative electrode; at least one separator interposed between the positive electrode and the negative electrode; and a third aqueous electrolyte held by the separator, in which at least one of the type of salt, the concentration of salt, the pH, and the osmotic pressure of the third aqueous electrolyte is different from both those of the first aqueous electrolyte and those of the second aqueous electrolyte. By having such a configuration, a battery having excellent storage performance and cycle performance can be provided.

The present disclosure also encompasses the following approaches:

1. A battery comprising:

a positive electrode (3);
a first aqueous electrolyte (AE1) held by the positive electrode (3);
a negative electrode (4);
a second aqueous electrolyte (AE2) held by the negative electrode (4);
at least one layer of a separator (5) interposed between the positive electrode (3) and the negative electrode (4); and
a third aqueous electrolyte (AE3) held by at least one of the separator (5), wherein
at least one of a type of salt, concentration of salt, pH, and osmotic pressure of the third aqueous electrolyte (AE3) is different from both those of the first aqueous electrolyte (AE1) and those of the second aqueous electrolyte (AE2).

2. The battery according to clause 1, wherein a relationship among pH of the first aqueous electrolyte (AE1), pH of the second aqueous electrolyte (AE2), and pH of the third aqueous electrolyte (AE3) is
pH of the first aqueous electrolyte (AE1) < pH of the third aqueous electrolyte (AE3) < pH of the second aqueous electrolyte (AE2).

3. The battery according to clause 1 or 2, wherein a relationship among osmotic pressure of the first aqueous electrolyte (AE1), osmotic pressure of the second aqueous electrolyte (AE2), and osmotic pressure of the third aqueous electrolyte (AE3) is

either osmotic pressure of the first aqueous electrolyte (AE1) < osmotic pressure of the third aqueous electrolyte (AE3) < osmotic pressure of the second aqueous electrolyte (AE2), or osmotic pressure of the first aqueous electrolyte (AE1) > osmotic pressure of the third aqueous electrolyte (AE3) > osmotic pressure of the second aqueous electrolyte (AE2).

4. The battery according to any one of clauses 1 to 3, wherein the third aqueous electrolyte (AE3) further comprises a buffer agent.

5. The battery according to clause 4, wherein a relationship among an acid dissociation constant pKa of the buffer agent, pH of the first aqueous electrolyte (AE1), and pH of the second aqueous electrolyte (AE2) is
pH of an electrolyte contained in the first aqueous electrolyte (AE1) < pKa of the buffer agent < pH of the second aqueous electrolyte (AE2).

6. The battery according to any one of clauses 1 to 5, wherein the separator (5) has an air permeability coefficient of $1 \times 10^{-14}$ $m^2$ or less.

7. The battery according to any one of clauses 1 to 6, wherein a negative electrode active material comprised in the negative electrode (4) is at least one selected from the group consisting of a titanium oxide, a lithium titanium oxide, and a lithium titanium composite oxide.

8. A battery pack comprising the battery according to any one of clauses 1 to 7.

9. The battery pack according to clause 8, further comprising:

an external power distribution terminal (59), and
a protective circuit (58).

10. The battery pack according to clause 8 or 9, comprising a plurality of the battery, wherein the plurality of the battery are electrically connected to each other in series, in parallel, or in a combination of series connection and parallel connection.

11. A vehicle (200) comprising the battery pack according to any one of clauses 8 to 10.

12. The vehicle (200) according to clause 11, wherein the battery pack is configured to recover kinetic energy of the vehicle (200) as regenerative energy.

13. A stationary power supply (110) comprising the battery pack according to any one of clauses 8 to 10.

While certain approaches have been described, these approaches have been presented by way of example only, and are not intended to limit the scope of the claims. Indeed, the novel batteries described herein may be embodied in a variety of other forms; furthermore, various omissions, substitutions and changes in the form of the batteries described herein may be made.

## Claims

**1.** A battery comprising:

a positive electrode (3);
a first aqueous electrolyte (AE1) held by the positive electrode (3);
a negative electrode (4);
a second aqueous electrolyte (AE2) held by the negative electrode (4);
at least one layer of a separator (5) interposed between the positive electrode (3) and the negative electrode (4); and
a third aqueous electrolyte (AE3) held by at least one of the separator (5), wherein
at least one of a type of salt, concentration of salt, pH, and osmotic pressure of the third aqueous electrolyte (AE3) is different from both those of the first aqueous electrolyte (AE1) and those of the second aqueous electrolyte (AE2).

**2.** The battery according to claim 1, wherein a relationship among pH of the first aqueous electrolyte (AE1), pH of the second aqueous electrolyte (AE2), and pH of the third aqueous electrolyte (AE3) is
pH of the first aqueous electrolyte (AE1) < pH of the third aqueous electrolyte (AE3) < pH of the second aqueous electrolyte (AE2).

**3.** The battery according to claim 1 or 2, wherein a relationship among osmotic pressure of the first aqueous electrolyte (AE1), osmotic pressure of the second aqueous electrolyte (AE2), and osmotic pressure of the third aqueous electrolyte (AE3) is
either osmotic pressure of the first aqueous electrolyte (AE1) < osmotic pressure of the third aqueous electrolyte (AE3) < osmotic pressure of the second aqueous electrolyte (AE2), or osmotic pressure of the first aqueous electrolyte (AE1) > osmotic pressure of the third aqueous electrolyte (AE3) > osmotic pressure of the second aqueous electrolyte (AE2).

**4.** The battery according to any one of claims 1 to 3, wherein the third aqueous electrolyte (AE3) further comprises a buffer agent.

**5.** The battery according to claim 4, wherein a relationship among an acid dissociation constant pKa of the buffer agent, pH of the first aqueous electrolyte (AE1), and pH of the second aqueous electrolyte (AE2) is
pH of an electrolyte contained in the first aqueous electrolyte (AE1) < pKa of the buffer agent < pH of the second aqueous electrolyte (AE2).

**6.** The battery according to any one of claims 1 to 5, wherein the separator (5) has an air permeability coefficient of $1 \times 10^{-14}$ $m^2$ or less.

**7.** The battery according to any one of claims 1 to 6, wherein a negative electrode active material comprised in the negative electrode (4) is at least one selected from the group consisting of a titanium oxide, a lithium titanium oxide, and a lithium titanium composite oxide.

**8.** A battery pack comprising the battery according to any one of claims 1 to 7.

**9.** The battery pack according to claim 8, further comprising:

an external power distribution terminal (59), and
a protective circuit (58).

**10.** The battery pack according to claim 8 or 9, comprising a plurality of the battery, wherein the plurality of the battery are electrically connected to each other in series, in parallel, or in a combination of series connection and parallel connection.

**11.** A vehicle (200) comprising the battery pack according to any one of claims 8 to 10.

**12.** The vehicle (200) according to claim 11, wherein the battery pack is configured to recover kinetic energy of the vehicle (200) as regenerative energy.

**13.** A stationary power supply (110) comprising the battery pack according to any one of claims 8 to 10.

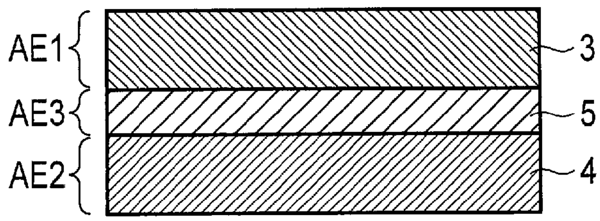


F I G. 1

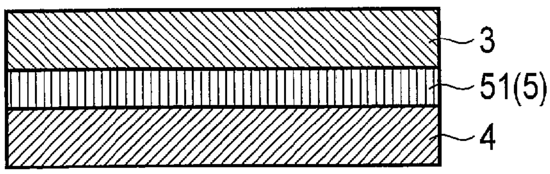


F I G. 2A

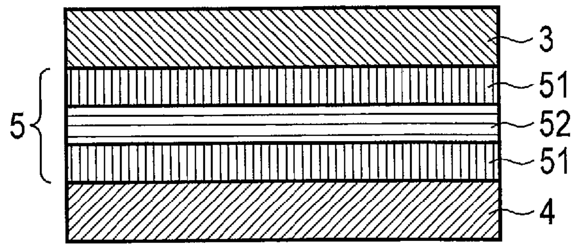


F I G. 2C

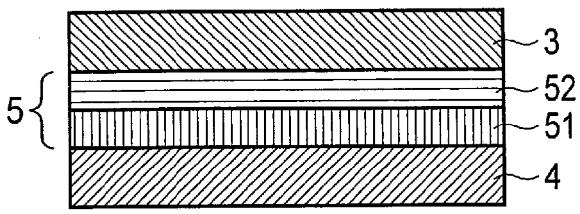


F I G. 2B

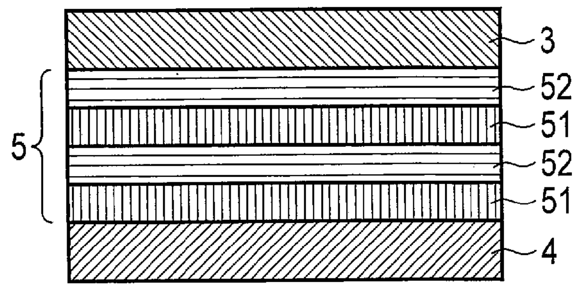


F I G. 2D

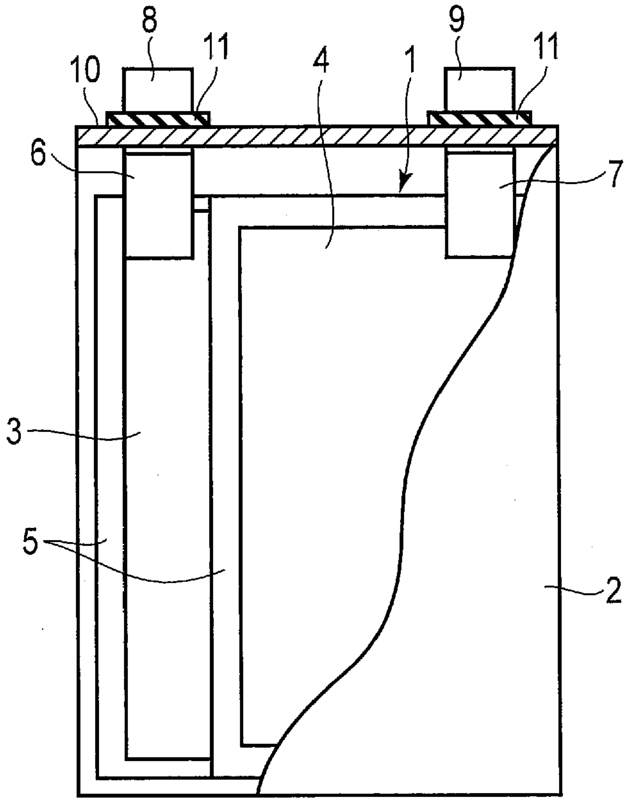


FIG. 3

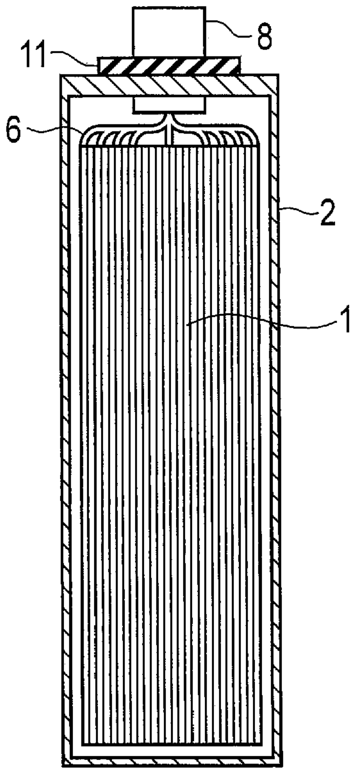


F I G. 4

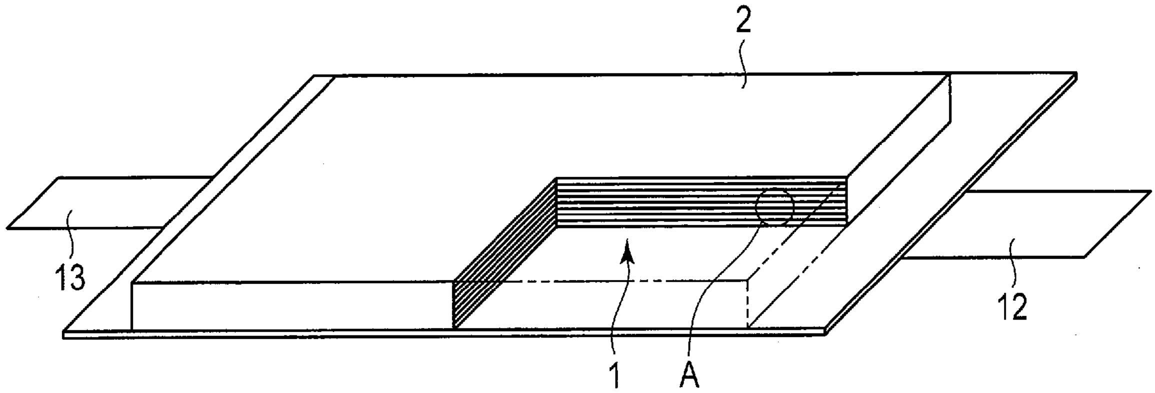


FIG. 5

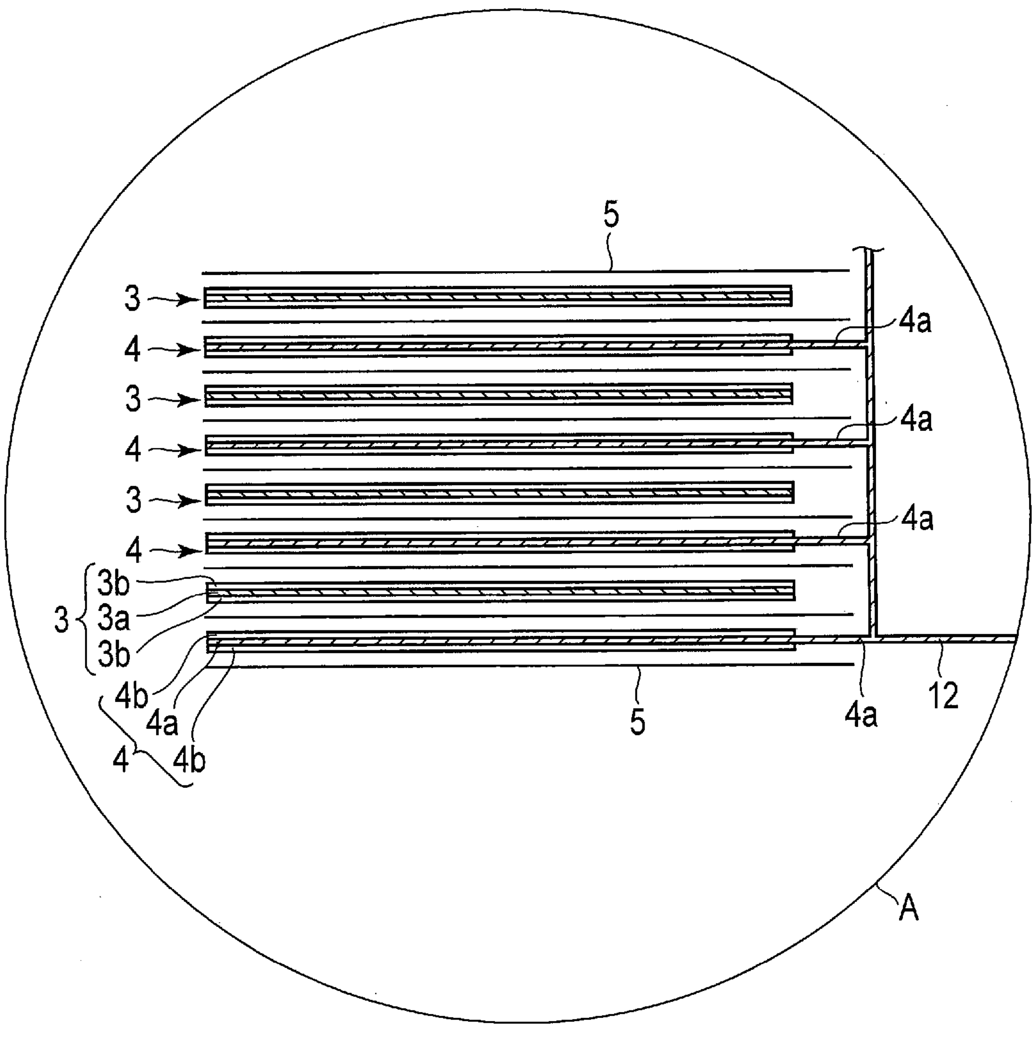


FIG. 6

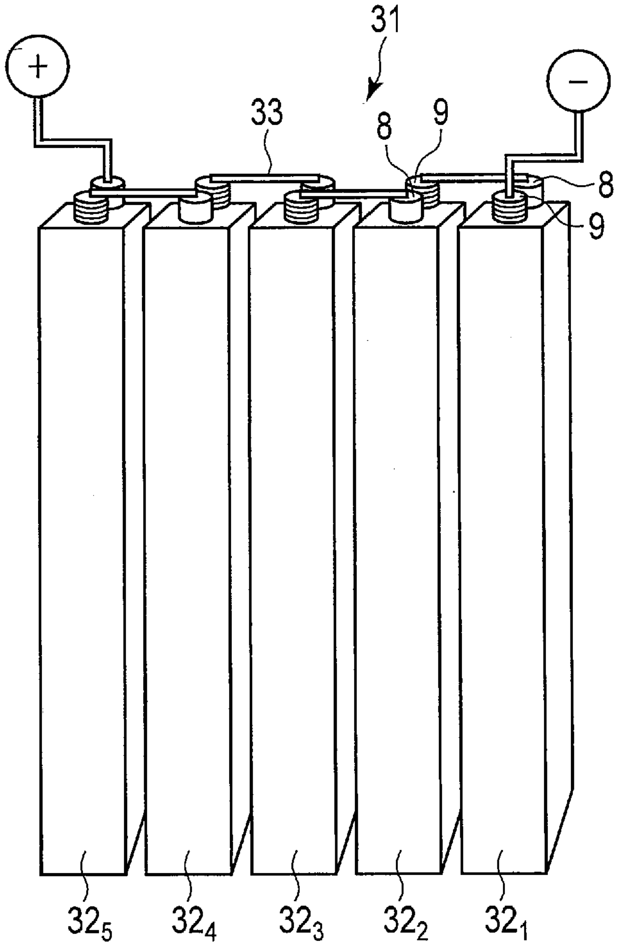


FIG. 7

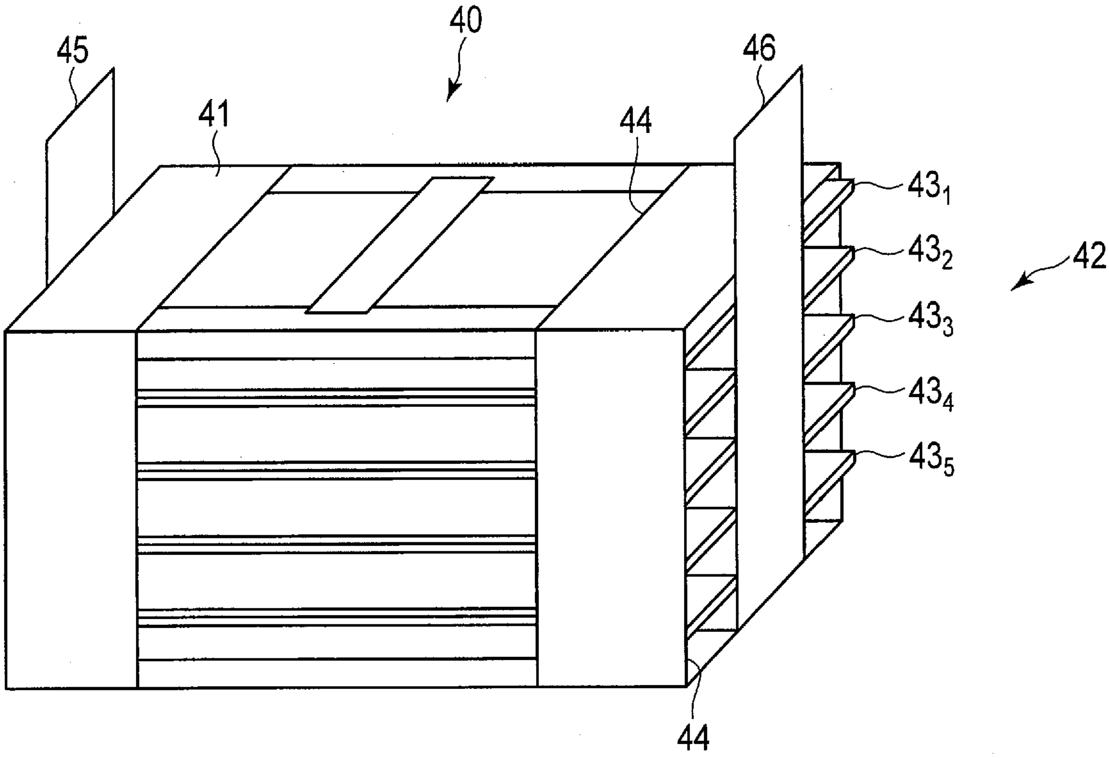


FIG. 8

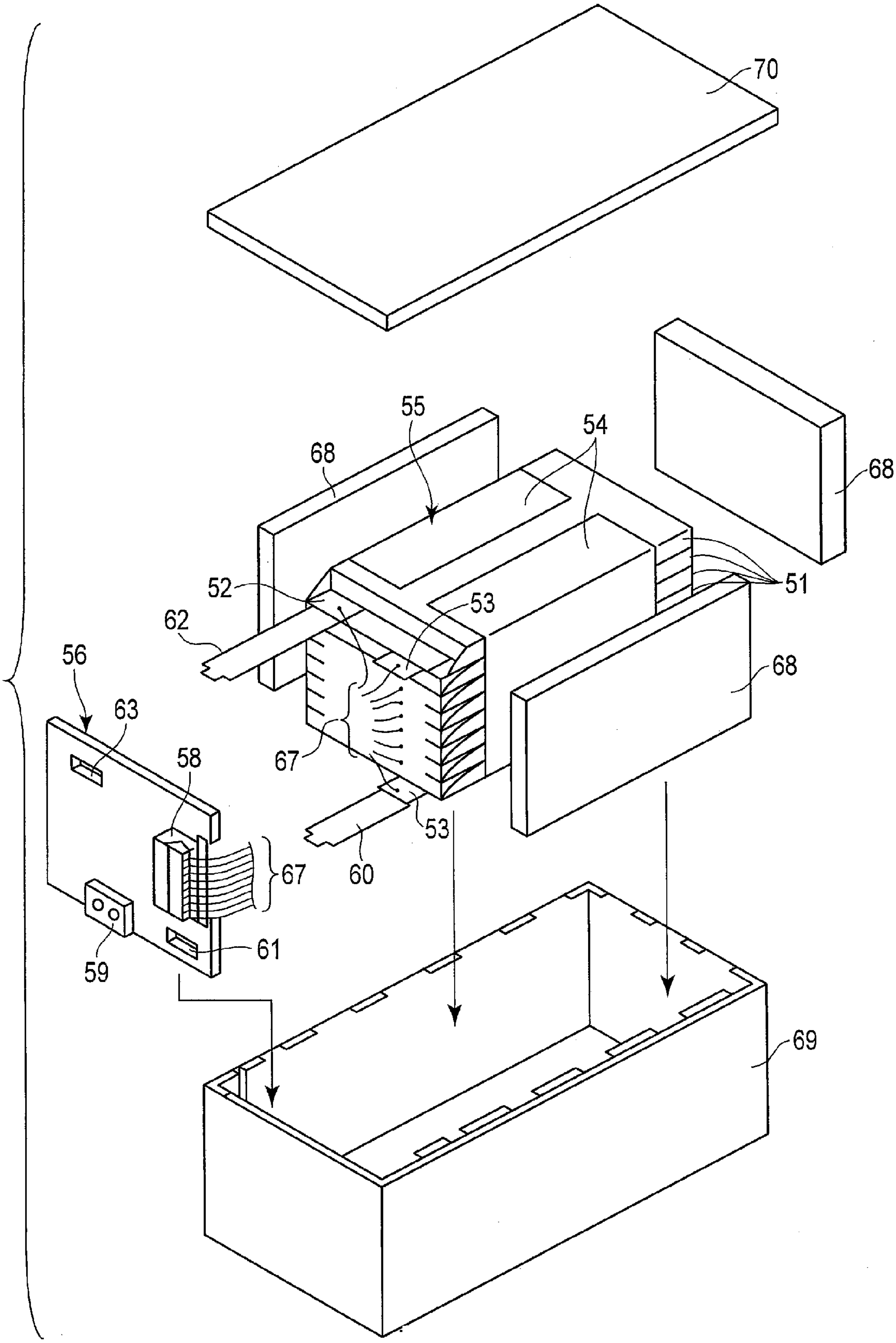


FIG. 9

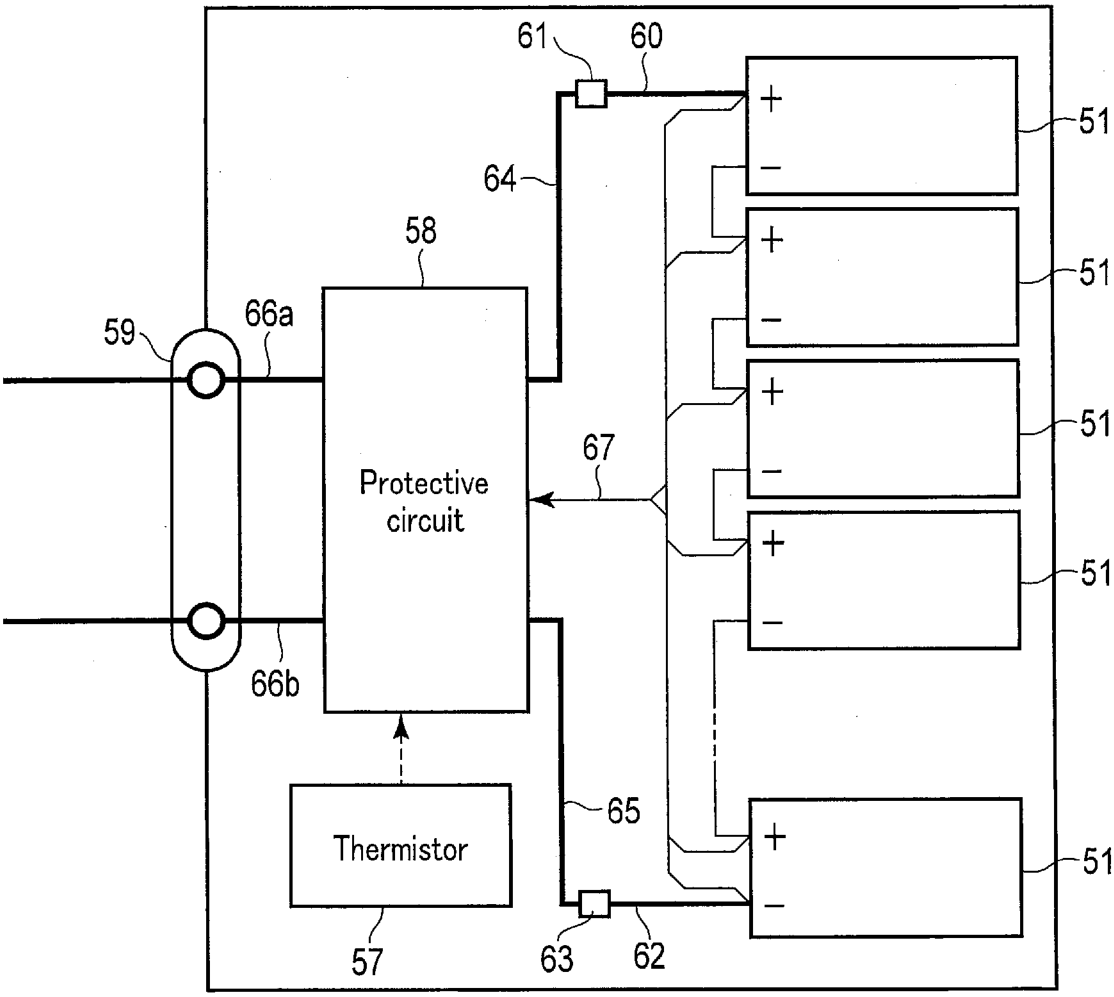
61
60
51
64
58
59
66a
Protective circuit
67
66b
Thermistor
65
57
63
62

F I G. 10

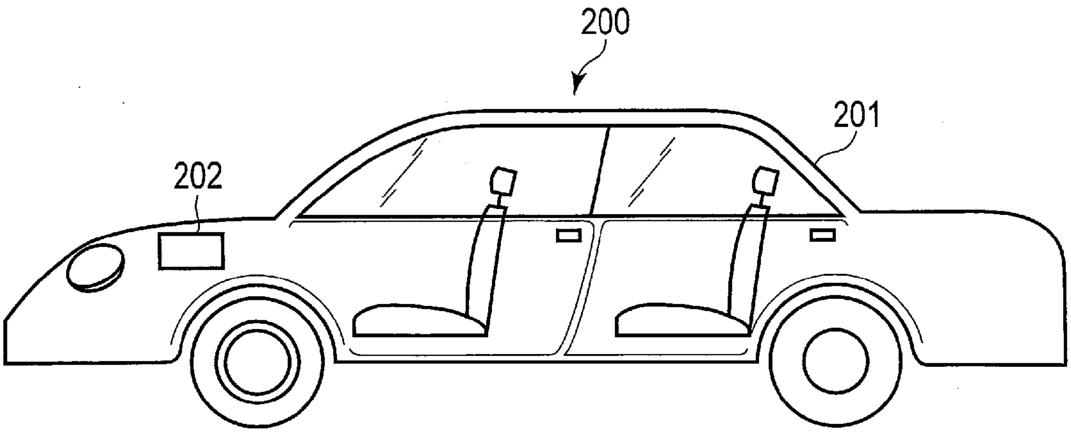
200
201
202

F I G. 11

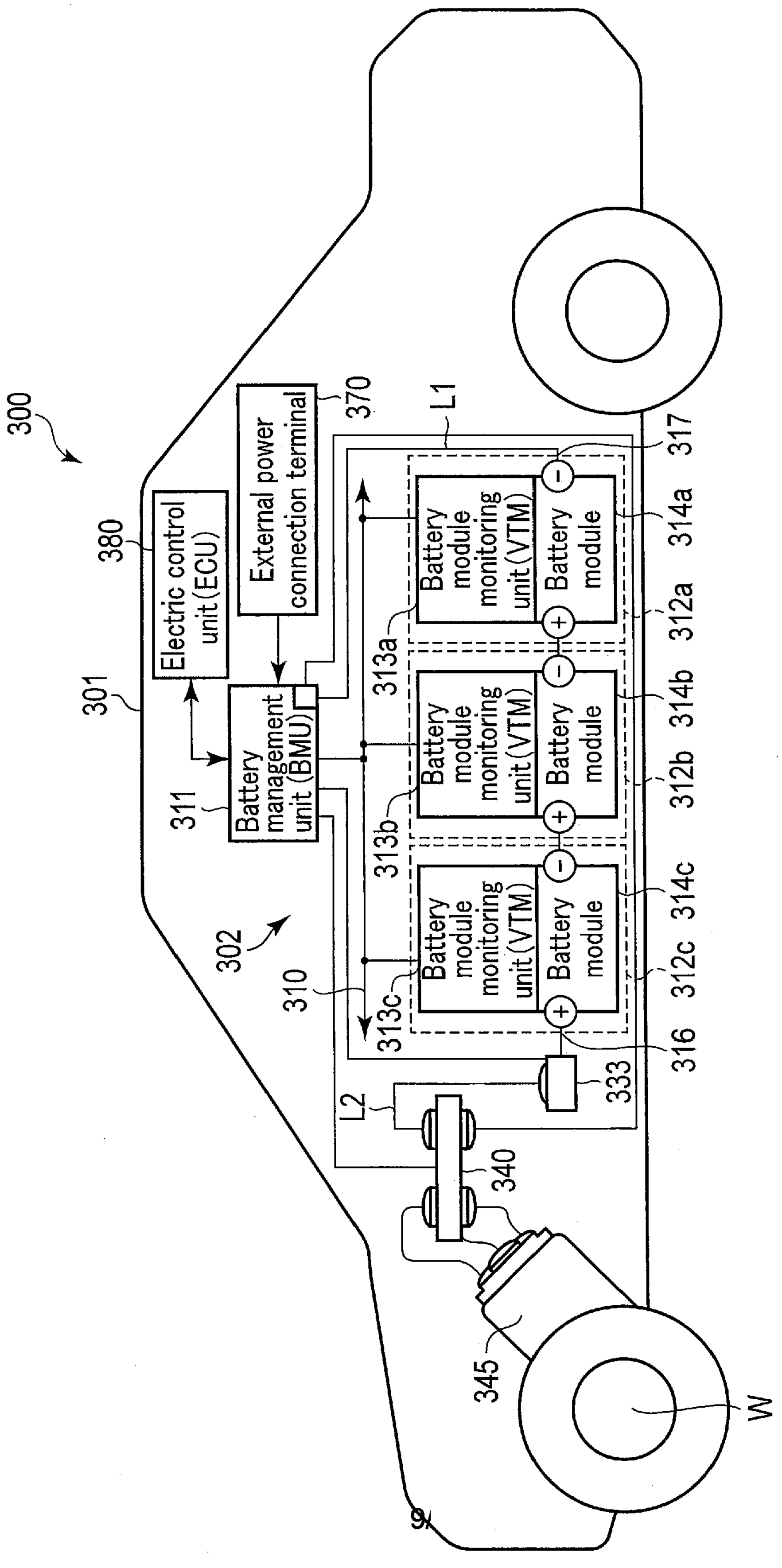
300
380
Electric control unit (ECU)
External power connection terminal
370
L1
317
301
311
Battery management unit (BMU)
313a
313b
313c
Battery module monitoring unit (VTM)
Battery module
314a
314b
314c
312a
312b
312c
302
310
316
333
L2
340
345
W

F I G. 12

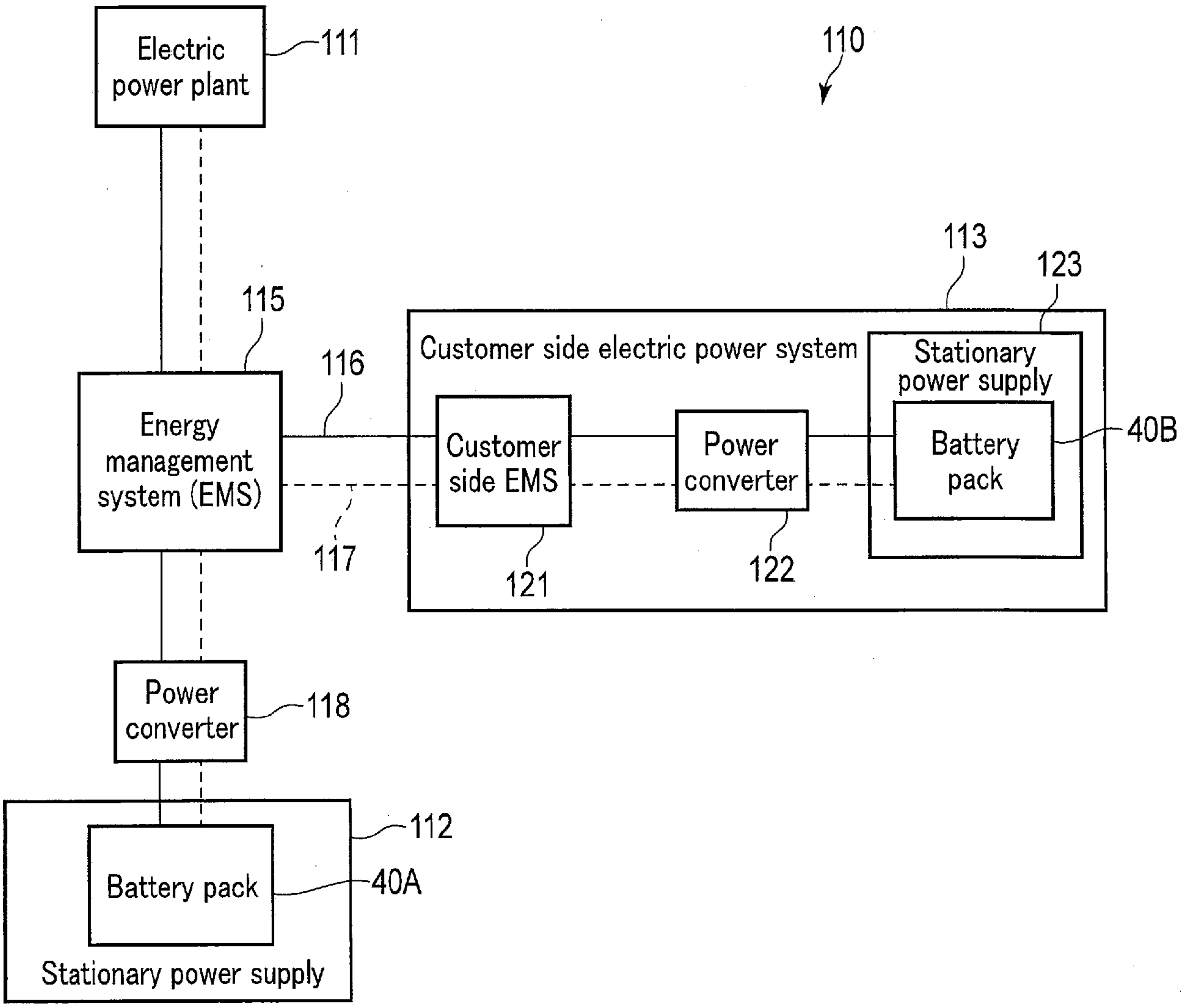
Electric power plant
111
110
113
123
115
116
Customer side electric power system
Stationary power supply
Energy management system (EMS)
Customer side EMS
Power converter
Battery pack
40B
117
121
122
Power converter
118
112
Battery pack
40A
Stationary power supply

F I G. 13

Europäisches Patentamt
European Patent Office
Office européen des brevets

# EUROPEAN SEARCH REPORT

Application Number
EP 20 19 3368

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 544 084 A1 (TOSHIBA KK [JP]) 25 September 2019 (2019-09-25)<br>* abstract *<br>* paragraphs [0119], [0126] *<br>* paragraphs [0068] - [0087] *<br>* claims 1-13 *<br>----- | 1-13 | INV.<br>H01M4/02<br>H01M10/36 |
| X | EP 3 376 578 A1 (TOSHIBA KK [JP]) 19 September 2018 (2018-09-19)<br>* abstract *<br>* paragraphs [0083] - [0108] *<br>* claims 1-13 *<br>----- | 1-13 | |
| X | EP 3 379 624 A1 (TOSHIBA KK [JP]) 26 September 2018 (2018-09-26)<br>* abstract *<br>* claims 1-13 *<br>* examples 1-19 *<br>----- | 1-13 | |

TECHNICAL FIELDS SEARCHED (IPC)

H01M

The present search report has been drawn up for all claims

| Place of search | Date of completion of the search | Examiner |
|---|---|---|
| Munich | 3 February 2021 | Stachowiak, Olaf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

1
EPO FORM 1503 03.82 (P04C01)

## ANNEX TO THE EUROPEAN SEARCH REPORT ON EUROPEAN PATENT APPLICATION NO. EP 20 19 3368

This annex lists the patent family members relating to the patent documents cited in the above-mentioned European search report. The members are as contained in the European Patent Office EDP file on
The European Patent Office is in no way liable for these particulars which are merely given for the purpose of information.

03-02-2021

| Patent document cited in search report | Publication date | Patent family member(s) | Publication date |
|---|---|---|---|
| EP 3544084 A1 | 25-09-2019 | CN 110299499 A<br>EP 3544084 A1<br>JP 2019169245 A<br>US 2019296306 A1 | 01-10-2019<br>25-09-2019<br>03-10-2019<br>26-09-2019 |
| EP 3376578 A1 | 19-09-2018 | CN 108631007 A<br>EP 3376578 A1<br>JP 2018156837 A<br>US 2018269537 A1 | 09-10-2018<br>19-09-2018<br>04-10-2018<br>20-09-2018 |
| EP 3379624 A1 | 26-09-2018 | CN 108630986 A<br>EP 3379624 A1<br>JP 6659608 B2<br>JP 2018156895 A<br>US 2018277885 A1 | 09-10-2018<br>26-09-2018<br>04-03-2020<br>04-10-2018<br>27-09-2018 |

EPO FORM P0459

For more details about this annex : see Official Journal of the European Patent Office, No. 12/82